# EUROPÄISCHE PATENTSCHRIFT

(11) **EP 4 200 683 B1**
(45) Veröffentlichungstag und Bekanntmachung des Hinweises auf die Patenterteilung: **18.09.2024**
(21) Anmeldenummer: 21762712.4
(22) Anmeldetag: 19.08.2021
(51) Int. Cl.: G01M 5/00, G06V 10/75, G06V 20/17, G06V 20/10, G05D 1/00

(54) **VERFAHREN UND SYSTEM ZUR OBJEKTERFASSUNG**
METHOD AND SYSTEM FOR OBJECT CAPTURE
PROCÉDÉ ET SYSTÈME DE CAPTURE D'OBJETS

(30) Priorität: 20.08.2020 DE 102020210618
(43) Veröffentlichungstag der Anmeldung: 28.06.2023
(73) Patentinhaber: TOP seven GmbH & Co. KG, 82319 Starnberg (DE)
(72) Erfinder: SENG, Ulrich, 82319 Starnberg (DE); NEUBAUER, Oliver, 82319 Starnberg (DE); STOCKER, Herbert, 82319 Starnberg (DE)
(74) Vertreter: Zimmermann, Tankred Klaus
(86) Internationale Anmeldenummer: PCT/EP2021/073052
(87) Internationale Veröffentlichungsnummer: WO 2022/038228

(56) Entgegenhaltungen:
- WO-A1-2017/045251
- SHIHAVUDDIN ASM ET AL: "Wind Turbine Surface Damage Detection by Deep Learning Aided Drone Inspection Analysis", ENERGIES (BASEL), 20 February 2019 (2019-02-20), Basel, pages 1 - 15, XP055856301, Retrieved from the Internet <URL:https://www.researchgate.net/profile/A-Shihavuddin-2/publication/331224532_Wind_Turbine_Surface_Damage_Detection_by_Deep_Learning_Aided_Drone_Inspection_Analysis/links/5c6d2b734585156b570ae6ce/Wind-Turbine-Surface-Damage-Detection-by-Deep-Learning-Aided-Drone-Inspection-Analysis.pdf> [retrieved on 20211029], DOI: 10.3390/en12040676

## Beschreibung

### Technisches Gebiet

Die vorliegende Offenbarung befasst sich mit Verfahren und Systemen zur Objekterfassung. Ausführungsbeispiele betreffen Verfahren und Systeme zur Erzeugung von Kalibrierungsdaten zur automatischen Positionsbestimmung oder Waypointgenerierung (Wegpunktgenerierung) für autonome Flüge eines unbemannten Luftfahrzeugs, UAV (unmanned aerial vehicle), zur Vorbereitung auf ein Verfahren zum Bestimmen eines Pfades entlang eines Objekts, z.B. einer Windkraftanlage.

### Hintergrund der Erfindung

Windkraftanlagen sind, neben Solar- und Wasserkraftanlagen, eine der wichtigen Quellen für erneuerbare Energie. Zum sicheren und ausfallarmen Betrieb der Anlagen ist eine regelmäßige Wartung und Inspektion unabdingbar.

Konventionelle Ansätze umfassen Klettertrupps, die die Anlagen begutachten. Neben dem inhärenten Risiko für die Kletterer ist eine solche Herangehensweise für die Vielzahl von Anlagen nicht praktikabel. Die Verfügbarkeit von Klettertrupps und deren Arbeitsgeschwindigkeit ist für eine ausreichend engmaschige Überprüfung nicht ausreichend.

Neuere Ansätze nutzen Drohnen zur Begutachtung der Windkraftanlagen. Doch auch bei diesen Ansätzen ist in der Regel ein erfahrener menschlicher Pilot notwendig, der Bilder der Anlage mit der Drohne aufnimmt, die später ausgewertet werden. Damit ist wiederum speziell geschultes Personal notwendig, was die Verfügbarkeit einschränkt und Kosten verursacht.

Ferner ist ein Ansatz aus "Shihavuddin, A. S. M., et al. "Wind turbine maintenance cost reduction by deep learning aided drone inspection analysis." (2019)." bekannt. Die Autoren befassen sich mit einem auf Deep Learning basierendes automatisches Schadensvorschlags-System für die nachträgliche Analyse von Drohnen-Inspektionsbildern. Dabei werden Methoden der Datenerweiterung verwendet.

Ferner sind Verfahren zur automatischen Aufnahme visueller Kontrolldaten mittels Drohnen bekannt. Die WO 2018/166645 A1 beschreibt z.B. ein Verfahren, bei dem eine Drohne anhand vorberechneter Wegpunkte automatisiert und/oder autonom eine Windkraftanlage abfliegt und Daten zur Auswertung generiert.

Ein Problem bei solchen Verfahren ist die Erzeugung von Kalibrierungsdaten, die dazu notwendig sind einen Flugweg für eine Drohne zu bestimmen. Herstellerdaten sowie Positionsdaten der Anlagen reichen in vielen Fällen nicht aus oder sind zu ungenau. In vielen Fällen ist auch kein verlässliches Modell, bspw. CAD-Modell der Anlage oder eine detaillierte Spezifikation verfügbar, anhand dessen eine Flugroute oder Wegpunkte für eine Drohne berechnet werden könnte.

### Zusammenfassung der Erfindung

Die der vorliegenden Offenbarung zugrundeliegende Aufgabe besteht darin, ein Verfahren und ein System zu schaffen, die eine Objekterfassung mit reduziertem Zeitaufwand und guter Qualität ermöglichen, die beispielsweise für eine schnelle und sichere Inspektion von Windkraftanlage herangezogen werden können.

Diese Aufgabe wird durch ein Verfahren nach Anspruch 1, und durch ein System nach Anspruch 15 gelöst.

Ausführungsbeispiele der vorliegenden Offenbarung schaffen ein Verfahren zur Erfassung eines Objekts, das durch eine Mehrzahl von vorbestimmten Merkmalen beschreibbar ist. Das Verfahren umfasst ein Abfliegen des Objekts und Erfassen mehrerer Abschnitte des Objekts mit zumindest einer Aufnahmeeinheit. Dabei wird jeder der Abschnitte mehrfach aus unterschiedlichen Positionen der Aufnahmeeinheit erfasst, um einen Satz von Bildern zu erzeugen. Dabei wird jedem Bild eine Positions- und Lageinformation der Aufnahmeeinheit bei Erzeugung des Bildes zugeordnet. Darüber hinaus umfasst das Verfahren ein Erkennen von Merkmalen in den Bildsätzen und ein Bestimmen der Positionen, bspw. Koordinaten und/oder Lagen der Merkmale unter Verwendung der Positions- und Lageinformationen der Bilder, die die Merkmale enthalten.

Ein Objekt kann gemäß Ausführungsbeispielen eine Windkraftanlage, ein Kran oder ein Strommast sein. Ein solches Objekt kann anhand charakteristischer Geometrien oder Merkmale beschrieben werden. Im Fall der Windkraftanlage umfassen die Merkmale z.B. die Rotorblattspitzen und Rotorblattflanschen. Ein Strommast wird z.B. durch seine Ausleger, den Turmmittelpunkt und die Turmspitze beschrieben. Sind die Positionen und Lagen der Merkmale bekannt, kann ein Modell des Objekts aufgestellt werden. Bei der Aufnahmeeinheit kann es sich um eine Drohne mit einer Erfassungseinheit , oder ein entsprechendes Modul für eine Drohne handeln. Die Erfassungseinheit kann beispielsweise dazu ausgelegt sein eine Erfassung mittels Laser zu ermöglichen. Ferner kann es sich bei der Erfassungseinheit um eine Kamera handeln. Die Aufnahmeeinheit kann darüber hinaus eine Mehrzahl von Drohnen, z.B. einen Drohnenschwarm umfassen. Das Erfassen kann noch eine Vielzahl von Optimierungsschritten, bspw. zur Verbesserung von Gegenlichteinflüssen bei der Aufnahme eines Bildes, umfassen. Die Positions- und Lageinformation, also bspw. der Ort und die Ausrichtung, der Aufnahmeeinheit, die jedem Bild zugeordnet wird, kann in einem absoluten Koordinatensystem, bspw. Weltkoordinaten oder einem relativen Koordinatensystem bezüglich einer Referenz erfolgen. Das Erkennen von Merkmalen in den Bildsätzen kann automatisiert, z.B. mittels KI (Künstliche Intelligenz) erfolgen, oder manuell durch einen Menschen.

Weitere Ausführungsbeispiele der vorliegenden Offenbarung schaffen ein System zur Erfassung eines Objekts, das durch eine Mehrzahl von vorbestimmten Merkmalen beschreibbar ist. Das System umfasst eine Messeinrichtung, die alleine oder im Verbund mit einer Drohne eine Aufnahmeeinheit bildet. Die Messeinrichtung ist bspw. dazu ausgelegt das Objekt abzufliegen und mehrere Abschnitte des Objekts aus unterschiedlichen Positionen zu erfassen, um einen Satz von Bildern zu erzeugen, wobei jedem Bild eine Positions- und Lageinformation der Messeinrichtung zugeordnet ist. Das System umfasst darüber hinaus eine Auswerteeinrichtung, die dazu ausgelegt ist, Merkmale in den Bildsätzen zu erkennen und Positionen, bspw. Koordinaten und/oder Lagen der Merkmale unter Verwendung der Positions- und Lageinformationen der Bilder, die die Merkmale enthalten, zu bestimmen.

Gemäß Ausführungsbeispielen handelt es sich bei der Messeinrichtung um ein Modul für eine Drohne. Das Modul kann eine Vorrichtung zur Erfassung aufweisen, oder für eine Drohne, die bereits mit einer Erfassungseinheit ausgestattet ist, lediglich eine Rechen- oder Datenverarbeitungseinheit sein. Das Modul kann ein Steuerelement für die Drohne umfassen und einen automatischen Drohnenflug ermöglichen. Das Modul kann darüber hinaus für die Kommunikation mit der Auswerteeinrichtung ausgelegt sein. Die Auswerteeinrichtung kann ein zusätzlicher Rechner oder entsprechende Software auf einem Rechner umfassen. Eine cloud-basierte Auswerteeinrichtung ist ebenfalls möglich. Dementsprechend können Auswerteeinrichtung und Messeinrichtung auch örtlich getrennt voneinander agieren. Zeitlich kann die Aufnahmeeinheit zuerst die Bildsätze erzeugen und anschließend an die Auswerteeinrichtung übermitteln. Die Auswertung kann unmittelbar oder zeitlich verzögert erfolgen.

Gemäß der vorliegenden Offenbarung wird also ein Objekt durch die Bestimmung von Positionen und/oder Lagen von vorbestimmten Merkmalen, mit welchen das Objekt beschrieben werden kann, erfasst. Die Bestimmung der Positionen und/oder Lagen der Merkmale erfolgt dabei mit Hilfe von Positions- und Lageinformationen von Bildsätzen, die die Merkmale enthalten. Dazu wird das zu erfassende Objekt mit einer Aufnahmeeinheit abgeflogen. Die Aufnahmeeinheit erfasst mehrere Abschnitte des Objektes mehrfach aus unterschiedlichen Positionen. Dadurch entstehen mehrere Sätze von Bildern. Jedem Bild wird dabei eine Positions- und Lageinformation der Aufnahmeeinheit bei der Erzeugung des Bildes zugeordnet. In den Bildsätzen werden anschließend die vorbestimmten Merkmale erkannt. Durch die bekannte Positions- und Lageinformation der Bilder kann auf die Positionen und/oder Lagen der vorbestimmten Merkmalen zurückgeschlossen werden. Durch die mehrfache Aufnahme von Abschnitten des Objekts können Tiefeninformationen, wie z.B. der Abstand des identifizierten Merkmals von der Aufnahmeeinheit generiert werden. Darüber hinaus ist durch die Auswertung von Bildsätzen eine statistische Auswertung möglich, die zum einen die Genauigkeit der Positions- und Lageinformationen verbessert und zum anderen auch Aussagen über die Güte der Positions- und Lageinformationen, bspw. in Form von Varianzen, ermöglichen kann. So können bei hoher Güte der Positions- und Lageinformationen beispielsweise ohne die Gefahr einer Kollision kleinere Abstände einer Drohne von einem zu begutachtenden Objekt eingestellt werden.

Gemäß Ausführungsbeispielen der vorliegenden Offenbarung ist das Erfassen mehrerer Abschnitte des Objekts ein optisches Erfassen. Im Fall einer optischen Erfassung kann die Erfassungseinheit als Kamera ausgebildet sein. Viele Drohnen sind bereits mit Kameras ausgestattet, sodass damit eine bspw. besonders kostengünstige Möglichkeit besteht eine Aufnahmeeinheit für das offenbarungsgemäße Verfahren bereitzustellen. Darüber hinaus sind für optische Erfassungsverfahren auch eine Vielzahl von Optimierungsverfahren bekannt, womit die Qualität eines erfassten Bildes gesteigert werden kann, bspw. zur Verbesserung einer darauffolgenden Auswertung.

Gemäß Ausführungsbeispielen der vorliegenden Offenbarung umfasst das Bestimmen der Positionen und/oder Lagen der Merkmale ferner ein Aufstellen einer Mehrzahl geometrischer Hilfskonstruktionen, bspw. Strahlen oder Geraden oder Richtungsvektoren, wobei die geometrischen Hilfskonstruktionen für jedes Bild, welches ein Merkmal enthält, zwischen
der Position der Aufnahmeeinheit, die jedem Bild zugeordneten ist, und der Position eines in dem Bild identifizierten Merkmals oder
den Positionen mehrerer in einem Bild identifizierten Merkmale, in einem Koordinatensystem aufgestellt werden.

Ferner erfolgt ein bspw. paarweises Auswerten der geometrischen Hilfskonstruktionen, um eine Menge von Ergebnissen für die Position und/oder Lage, bspw. Ort und/oder Ausrichtung des Merkmals oder eines aus mehreren Merkmalen abgeleiteten Merkmals, zu erhalten. Die Menge von Ergebnissen kann darüber hinaus statistisch ausgewertet werden.

Die geometrischen Hilfskonstruktionen können Geraden umfassen, aus deren Schnittpunkten, die Position des Merkmals bestimmt werden kann. Dabei können geometrische Hilfskonstruktionen explizit nicht mitberücksichtigt werden, bspw. wenn erkannt wurde, dass diese fehlerhaft identifiziert wurden.

Durch die Hilfskonstruktionen lässt sich der notwendige Rechenaufwand zur Auswertung begrenzen, da die relevante Information bezüglich Position und Lage eines Merkmals durch die Hilfskonstruktion beschrieben werden kann und nicht die gesamte Bildinformation verarbeitet werden muss. Gemäß Ausführungsbeispielen können Positionen und/oder Lagen von abgeleiteten Merkmalen bestimmt werden. Ein Objekt kann Merkmale aufweisen, deren Position und/oder Lage nur schwer anhand einer z.B. optischen Auswertung identifizierbar bzw. erkennbar sind. Ein solches Merkmal kann über bekannte geometrische Zusammenhänge mit besser identifizierbaren Merkmalen des Objekts zusammenhängen. Beispielsweise kann die direkte Identifikation des Mittelpunkts eines Rotorflansches einer Windkraftanlage anhand eines Bildsatzes aufwändig oder unmöglich bestimmbar sein, da sich der Mittelpunkt des Flansches innerhalb des durch das montierte Rotorblatt verdeckten Bereichs befindet. Ein Rückschluss auf die Position des Mittelpunktes durch benachbarte, bspw. um den Mittelpunkt symmetrisch verteilte Punkte auf einem Umkreis um den Mittelpunkt des Flansches kann dagegen deutlich einfacher sein.

Gemäß Ausführungsbeispielen der vorliegenden Offenbarung umfasst das Verfahren ferner ein Bestimmen einer Ausrichtung, bspw. einer Lageinformation oder Orientierung, des Objektes durch eine Auswertung einer Referenzposition des Objektes und einer Positionsinformation der Aufnahmeeinheit, wobei die Aufnahmeeinheit zum Zeitpunkt der Aufnahme der Positionsinformation entsprechend der Ausrichtung des Objektes positioniert ist.

Bei der zu bestimmenden Ausrichtung kann es sich zum Beispiel um die Ausrichtung einer Windkraftanlage handeln. Die Aufnahmeeinheit kann eine Drohne sein.

Diese Art der Bestimmung der Ausrichtung kann schnell durchgeführt werden und kommt ohne zusätzliche Messeinrichtungen, sondern lediglich mit der Aufnahmeeinheit, aus. Insbesondere durch eine bspw. ungefähre Bestimmung der Ausrichtung, können schnell ausreichend genaue Daten erfassbar sein, mit welchen ein z.B. anschließender autonomer Drohnenflug durchgeführt werden kann.

Gemäß Ausführungsbeispielen der vorliegenden Offenbarung umfasst das Verfahren ferner ein Bestimmen der Referenzposition, bspw. eines Mittelpunkts des Objekts durch Auswerten einer Menge von Positionsinformationen der Aufnahmeeinheit, wobei die Menge von Positionsinformationen aus einer Bewegungstrajektorie, bspw. aus einer Umrundung des Objekts, der Aufnahmeeinheit stammt.

Bei der Referenzposition kann es sich um den Turmmittelpunkt einer Windkraftanlage handeln. Diese kann durch die Aufnahmeeinheit, wie bspw. eine Drohne bestimmt werden. Die Bewegungstrajektorie kann durch ein zumindest teilweises Umrunden der Windkraftanlage, bspw. entlang der äußeren Wand des Turms der Windkraftanlage, stammen.

Dadurch ist bspw. selbst beim Fehlen jedweder Referenzdaten des Objekts eine schnelle Möglichkeit offenbart eine Referenzposition zu bestimmen. Bei der Bewegungstrajektorie kann es sich um eine Kreisbahn oder um einen Teil einer Kreisbahn um das Objekt herum handeln.

Gemäß Ausführungsbeispielen der vorliegenden Offenbarung umfasst das Verfahren ferner ein Bestimmen von zumindest einer Abmessung des Objekts, durch die Auswertung eines Referenzpunktes des Objektes, und der Position eines oder mehrerer der Merkmale.

Bei der Abmessung des Objekts, kann es sich um die Nabenhöhe einer Windkraftanlage handeln. Die Nabenhöhe kann entsprechend dem offenbarungsgemäßen Verfahren bestimmt oder verifiziert werden, z.B. wenn bereits Informationen um die Nabenhöhe vorliegen. Dadurch kann eine schnelle und automatisierte Bestimmung von Geometrien des Objekts erfolgen.

Gemäß Ausführungsbeispielen der vorliegenden Offenbarung umfasst das Verfahren ferner ein Bestimmen des Referenzpunktes, bspw. einer Höhe als Nullpunkt, des Objekts durch Platzieren der Aufnahmeeinheit auf dem Referenzpunkt und anschließendem Auswerten der Positionsinformation der Aufnahmeeinheit.

Bei dem Referenzpunkt kann es sich um einen Punkt aus dem zwei- oder dreidimensionalen Raum, aber auch um einen skalare Größe, bspw. eine Höhe über Normal-Null handeln. Damit ist bspw. ein schnelles Bestimmen des Referenzpunktes, nur auf Grundlage der Positionsinformation der Aufnahmeeinheit, ohne zusätzliche Messgeräte, möglich.

Gemäß Ausführungsbeispielen der vorliegenden Offenbarung handelt es sich bei der Aufnahmeeinheit um eine Drohne, oder eine Messeinrichtung im Verbund mit einer Drohne, die dazu ausgelegt ist die Sätze von Bildern zu erzeugen und jedem Bild die Positions- und Lageinformation der Aufnahmeeinheit, zum Zeitpunkt der Aufnahme des jeweiligen Bildes, zuzuordnen.

Durch die Verwendung einer Drohne können bspw. schwer zugängliche Bereiche eines Objekts schnell und ohne Gefährdung eines Menschen erfasst werden.

Gemäß Ausführungsbeispielen der vorliegenden Offenbarung umfassen die Positionen der Aufnahmeeinheit und der Merkmale Koordinaten eines vorbestimmten Koordinatensystems.

Gemäß Ausführungsbeispielen der vorliegenden Offenbarung umfasst das Verfahren ferner ein Einsetzen eines Echtzeit Kinematik, RTK (Real Time Kinematic), zur Korrektur der Positions- und Lageinformation der Aufnahmeeinheit.

Durch das Echtzeit Kinematik System kann die Genauigkeit der Positionsbestimmung verbessert werden Beispielsweise kann bezüglich einer Höheninformation eine Genauigkeitsverbesserung von 2 cm und bezüglich der weiteren Dimensionen eine Genauigkeitsverbesserung von 1 cm bis zu 2,5 cm erzielt werden. Damit ist darüber hinaus bspw. eine kostengünstige Möglichkeit geschaffen, ausreichend genaue Positions- und Lagedaten zu generieren, mit denen das Objekt erfasst werden kann, ohne aufwändige, teure und schwere Technik zur genauen Positionsbestimmung in der Aufnahmeeinheit integrieren zu müssen. Der Kalibrierungsflug kann dabei ein Abfliegen des Objekts und Erfassen mehrerer Abschnitte des Objekts umfassen. Darüber hinaus kann auch ein lokales, eigenständiges Koordinatensystem, z.B. Preziwave, verwendet werden, sodass nicht bindend ein GPS Gerät genutzt werden muss.

Gemäß Ausführungsbeispielen der vorliegenden Offenbarung umfasst der Schritt des Abfliegen des Objekts, ein automatisiertes und/oder autonomes Abfliegen des Objekts.

Durch ein automatisiertes Abfliegen kann eine schnelle und einfache Erfassung des Objekts erfolgen. Beispielsweise kann auf einen für manuelle Flüge ausgebildeten Drohnenpiloten verzichtet werden. Mit dem Wegfall menschlicher Steuereingriffe kann auch die Wahrscheinlichkeit von Kollisionen oder Zwischenfällen verringert werden.

Gemäß Ausführungsbeispielen der vorliegenden Offenbarung ist der Schritt des Erkennens von Merkmalen in den Bildsätzen ein automatisiertes Erkennen der Merkmale in den Bildsätzen und/oder der Schritt des Bestimmen der Positionen und/oder Lagen der Merkmale ist ein automatisiertes Bestimmen der Positionen und/oder Lagen der Merkmale.

Durch einen hohen Automatisierungsgrad des Verfahrens können die Kosten für die Inspektion eines Objekts, bspw. durch die schnellere Durchführung oder verringerte Personalkosten, verringert werden. Darüber hinaus können menschliche Fehler bei der Auswertung vermieden werden.

Gemäß Ausführungsbeispielen der vorliegenden Offenbarung handelt es sich bei dem Objekt um eine Windkraftanlage, bspw. Windkraftwerk, Windenergieanlage oder Windrad, wobei die Windkraftanlage einen Turm, eine Gondel, eine Nabe, Rotorblattflansche, sowie Rotorblätter und eine gemeinsame Drehachse der Rotorblätter aufweist. Dabei umfasst das Verfahren ferner die Bestimmung eines oder mehrerer Parameter der Windkraftanlage auf Grundlage der Positionen, bspw. Koordinaten und/oder Lagen der Merkmale.

Aufgrund der vielen schwer zugänglichen Bereiche einer Windkraftanlage kann ein offenbarungsgemäßes Verfahren, z.B. zur weiteren Verwendung gesammelter Daten, bzw. Parameter für einen darauffolgenden Inspektionsflug große Vorteile bieten, insbesondere im Hinblick auf die Zeitdauer für eine derartige Datenerhebung oder bspw. Vermessung. Darüber hinaus lassen sich durch den Einsatz eines automatisierten offenbarungsgemäßen Verfahrens Schulungskosten für Personal wie Kletterer sparen, und vor allem die Wahrscheinlichkeit für Arbeitsunfälle signifikant verringern, da bspw. keine Kletterer zur Begutachtung mehr eingesetzt werden müssen.

Gemäß Ausführungsbeispielen der vorliegenden Offenbarung umfasst der zumindest eine Parameter, der bestimmt wird, eine Verformung und/oder Biegung der Rotorblätter. Diese wird z.B. durch eine Approximation des Verlaufs der Rotorblätter mit einer mathematischen Funktion, bspw. linear, exponentiell oder logarithmisch, bestimmt.

Durch die Bestimmung der Verformung und/oder Biegung der Rotorblätter können kritische Abweichungen von Normgeometrien erkannt werden, bevor ein Versagen der Anlage eintritt. Die Approximation mit einer mathematischen Funktion, z.B. auf Grundlage bestimmter charakteristischer Positionen und/oder Lagen von Merkmalen, wie bspw. die Position der Rotorblattspitzen und die Position und/oder Lage der Rotorblattflansche, kann eine schnelle und z.B. wenig rechenintensive Möglichkeit bilden, um ein ausreichend präzises Modell für den Verlauf der Rotorblätter zu generieren. Eine Information über die Verformung und/oder Biegung der Rotorblätter kann darüber hinaus dazu genutzt werden, um ein Modell für bspw. eine Wegpunkt-Generierung für einen anschließenden Inspektionsflug zu erhalten, sodass eine Drohne z.B. automatisiert sehr nah an die Windkraftanlage heranfliegen kann um hochauflösende Aufnahmen zu machen, ohne die Gefahr einer Kollision, aufgrund des Modells.

Gemäß Ausführungsbeispielen der vorliegenden Offenbarung umfasst der zumindest eine Parameter, der bestimmt wird, eine Position, bspw. der Ort einer Rotorblattspitze. Das Bestimmen der Position der Rotorblattspitze umfasst ein Bestimmen einer Gerade zwischen der, in einem Bild identifizierten, Position der Rotorblattspitze und der zugehörigen Position der Aufnahmeeinheit. Ferner werden zur Bestimmung der Geraden neben der Position der Aufnahmeeinheit zum Zeitpunkt der Aufnahme des Bildes und der identifizierten Position der Rotorblattspitze auch die Lage, bspw. Orientierung oder Ausrichtung der Aufnahmeeinheit zum Zeitpunkt der Aufnahme des Bildes, sowie Eigenschaften der Aufnahmeeinheit, z.B. Öffnungswinkel und Anzahl der Pixel einer Kamera der Aufnahmeeinheit, mitberücksichtigt. Darüber hinaus wird eine Mehrzahl von Geraden für einen Satz von Bildern der Rotorblattspitze bestimmt und paarweise ausgewertet. Für jedes Geradenpaar wird ein Schnittpunkt berechnet und aus der Menge der Geradenpaare wird die Position der Rotorblattspitze berechnet.

Die Berechnung der Rotorblattspitze kann eine statistische Auswertung der berechneten Schnittpunkte umfassen. Die Auswertung kann auch die Berechnung einer Ergebnisgüte umfassen. Anhand der Güte kann bspw. eine Maßzahl für die Exaktheit eines aufgestellten Modells der Windkraftanlage angegeben werden. Darüber hinaus können Geradenpaare, die für eine Berechnung der Position der Rotorblattspitze ungünstig sind, aussortiert werden, z.B. bevor die Menge der Schnittpunkte ausgewertet wird, um ein präziseres Ergebnis zu erhalten. Eine Detektion solcher ungünstiger Geradenpaare könnte dahingehend erfolgen, dass ein berechneter Schnittpunkt eines Geradenpaares sich außerhalb eines bestimmten Bildbereich, in dem z.B. das Merkmal Rotorblattspitze identifiziert wurde, befindet.

Durch diese offenbarungsgemäße Herangehensweise kann mit einfachen mathematischen Verfahren, z.B. mit geringem Rechenaufwand, ein Ergebnis für die Position einer Rotorblattspitze berechnet werden. Damit kann auch eine Auswertung vor Ort, bspw. mit der Rechenleistung einer mobilen Recheneinheit ermöglicht werden.

Gemäß Ausführungsbeispielen der vorliegenden Offenbarung umfasst der zumindest eine Parameter, der bestimmt wird, eine Position, bspw. den Mittelpunkt eines Rotorblattflansches. Das Bestimmen der Position des Rotorblattflansches umfasst ein Bestimmen einer ersten Geraden zwischen der Position eines ersten, in einem Bild identifizierten Punktes des Rotorblattflansches und der Position der Aufnahmeeinheit und einer zweiten Geraden zwischen der Position eines zweiten, dem ersten Punkt gegenüberliegenden, in demselben Bild identifizierten Punktes des Rotorblattflansches und der Position, bspw. den Koordinaten der Aufnahmeeinheit.

Zur Bestimmung der ersten und zweiten Geraden werden neben der Position, bspw. dem Ort der Aufnahmeeinheit zum Zeitpunkt der Aufnahme des Bildes und den identifizierten Positionen der Punkte der Rotorblattflansche ferner auch die Lage, bspw. Ausrichtung oder Orientierung der Aufnahmeeinheit zum Zeitpunkt der Aufnahme des Bildes, sowie Eigenschaften der Aufnahmeeinheit, wie bspw. Öffnungswinkel und/oder Anzahl der Pixel einer Kamera der Aufnahmeeinheit mitberücksichtigt. Ferner wird eine weitere Gerade bestimmt, die in der Mitte zwischen der ersten und zweiten Gerade verläuft. Darüber hinaus wird eine Mehrzahl weiterer Geraden für einen Satz von Bildern des Rotorblattflansches bestimmt. Die Position des Rotorblattflansches wird aus der Mehrzahl der weiteren Geraden bestimmt.

Die Bestimmung der Position des Rotorblattflansches kann eine statistische Auswertung der Mehrzahl weiterer Geraden umfassen. Aus der statistischen Auswertung kann eine Ergebnisgüte berechnet werden.

Durch das offenbarungsgemäße Verfahren kann aus einer Auswertung die Position des Rotorblattflansches bestimmt werden. Durch das montierte Rotorblatt, welches den Mittelpunkt des Rotorblattflansches verdeckt, kann eine direkte Auswertung der Position des Rotorblattflansches ungenau, oder unmöglich sein. Durch die bspw. schnelle und wenig rechenaufwändige Auswertung zweier z.B. maschinell einfach identifizierbarer, Punkte des Rotorblattflansches pro Bild entsprechend des beschriebenen Verfahrens kann dieses Problem gelöst werden.

Bei Beispielen gemäß der vorliegenden Offenbarung umfasst der zumindest eine Parameter, der bestimmt wird, eine Lage eines Rotorblattflansches. Das Bestimmen der Lage des Rotorblattflansches umfasst ein Identifizieren zweier gegenüberliegender Punkte des Rotorblattflansches in einem Bild. Dabei wird ein Richtungsvektor einer Verbindungsgerade zwischen den Positionen der beiden gegenüberliegenden Punkte des Rotorblattflansches bestimmt. Darüber hinaus wird eine Mehrzahl von Richtungsvektoren von Verbindungsgeraden für einen Satz von Bildern des Rotorblattflansches bestimmt. Aus der Mehrzahl von Richtungsvektoren der Verbindungsgeraden wird durch paarweise Bildung des Kreuzproduktes der Richtungsvektoren der Verbindungsgeraden eine Menge von möglichen Normalenvektoren des Rotorblattflansches berechnet. Ferner wird ein Normalenvektor des Rotorblattflansches aus der Menge der möglichen Normalenvektoren berechnet.

Die Berechnung des Normalenvektors des Rotorblattflansches kann eine statistische Auswertung der Menge von möglichen Normalenvektoren und eine Berechnung einer Ergebnisgüte für den Normalenvektor umfassen. Durch die Bestimmung der Lage der Rotorblattflansche und damit der Drehung des Rotors ist ein offenbarungsgemäßes Verfahren nicht auf eine vordefinierte Stellung der Rotorblätter der Windkraftanlage angewiesen. Bspw. ist keine Verboltzung, z.B. auf der 6 Uhr-Position eines der Rotorblätter notwendig, um einen autonomen Drohnenflug zu ermöglichen. Damit kann Zeit und zusätzlicher Aufwand zur Ausrichtung der Windkraftanlage eingespart werden.

Gemäß Ausführungsbeispielen der vorliegenden Offenbarung umfasst der zumindest eine Parameter, der bestimmt wird, den Turmmittelpunkt, bspw. die Turmposition. Das Bestimmen des Turmmittelpunkts umfasst ein Umrunden des Turms entlang der äußeren Wand des Turms mit der Aufnahmeeinheit, bspw. mit einem möglichst gleichen Abstand zur Wand des Turms, sowie ein Aufzeichnen der Positionen der Aufnahmeeinheit beim Umrunden des Turms. Ferner erfolgt eine Bildung von Positionsteilmengen aus jeweils drei Punkten, wobei die drei Punkte einen vorbestimmten Abstand zueinander aufweisen.

Darüber hinaus kann eine Bestimmung einer Menge von Schwerpunkten von Dreiecken aus einer Mehrzahl der Positionsteilmengen erfolgen, wobei jedes Dreieck aus den drei Punkten einer Positionsteilmenge gebildet wird. Der Turmmittelpunkt wird dabei aus dem Durchschnitt der Schwerpunkte berechnet. Alternativ oder zusätzlich kann eine Bestimmung einer Menge von Kreismittelpunkten aus einer Mehrzahl der Positionsteilmengen erfolgen, wobei jeder Kreismittelpunkt aus den drei Punkten einer Positionsteilmenge, mit Hilfe der allgemeinen Kreisgleichung, bestimmt wird. Dabei erfolgt die Berechnung des Mittelpunkts des Turms aus der Menge der Kreismittelpunkte. Alternativ oder zusätzlich kann eine Bestimmung einer Menge von Umkreismittelpunkten aus einer Mehrzahl der Positionsteilmengen erfolgen, wobei jeder Umkreismittelpunkt der Mittelpunkt eines Umkreises eines Dreiecks ist, welches aus den drei Punkten einer Positionsteilmenge gebildet ist. Dabei erfolgt das Berechnen des Mittelpunkts des Turms aus der Menge der Umkreismittelpunkte. Bei den Dreiecken kann es sich bspw. um gleichseitige oder gleichschenklige Dreiecke handeln.

Die Berechnung des Turmmittelpunks kann eine statistische Auswertung, sowie die Berechnung einer Ergebnisgüte umfassen. Damit ist eine Möglichkeit geschaffen bspw. ohne jedwede geographischen a priori Informationen in einem Arbeitsschritt die Position, z.B. in Form des Mittelpunkts der Anlage auf Grundlage von Positionsinformationen der Aufnahmeeinheit zu bestimmen. Damit ist das Verfahren nicht auf genaue, bekannte Positionsinformationen angewiesen. Durch einen bekannten Turmmittelpunkt kann eine Drohne autonom zur Windkraftanlage fliegen, um diese zu erfassen. Durch bekannte Positionen mehrerer Windkraftanlagen eines Windparks, kann eine autonome Erfassung mehrerer Windkrafträder nacheinander, durch eine Drohne ermöglicht werden.

Gemäß Ausführungsbeispielen der vorliegenden Offenbarung umfasst das Verfahren ferner das Bestimmen eines oder mehrerer der folgenden Parameter:
die Nabenhöhe, bspw. die Höhe der Drehachse,
die Neigung der Drehachse,
der Nabendurchmesser,
die Ausrichtung, bspw. das Heading, der Azimut bzw. Azimutwinkel der Windkraftanlage,
die Mittelpunkte der Rotorblattflansche,
der Durchmesser der Rotorblattflansche,
die Länge der Rotorblätter,
die Neigung der Rotorblätter,
die Stellung, bspw. Drehung der Rotorblätter, z.B. bzgl. einer Rotation,
der Neigungswinkel (Pitchwinkel) der Rotorblätter,
die Rotorblattdicke, und
die Rotorblattbreite.

Die Bestimmung eines oder mehrerer der Parameter kann dabei
ein Berechnen eines ersten Normalenvektors einer ersten Ebene, die aus den Positionen der Rotorblattflansche, bspw. Flanschmittelpunkte aufgespannt ist,
ein Berechnen eines zweiten Normalenvektors einer zweiten Ebene, die aus den Positionen der Rotorblattspitzen aufgespannt ist,
ein Bestimmen eines ersten Mittelpunkts eines Kreises, dessen Kreisbahn durch die Positionen der Rotorblattflansche, bspw. Flanschmittelpunkte bestimmt ist und
ein Bestimmen eines zweiter Mittelpunkt eines Kreises, dessen Kreisbahn durch die Positionen der Rotorblattspitzen bestimmt ist
umfassen.

Eine Bestimmung der Ausrichtung der Anlage, und der Neigung der Drehachse der Windkraftanlage kann durch die Auswertung von einem oder beiden Normalenvektoren berechnet werden.

Eine Bestimmung der Nabenhöhe der Windkraftanlage kann durch die Auswertung von einem oder beiden Mittelpunkten und des Referenzpunktes erfolgen.

Die Bestimmung der Stellung der Rotorblätter, z.B. bezüglich einer gemeinsamen Drehachse, bspw. abweichend von der z.B. 6-Uhr Stellung kann durch einen Vergleich der Positionen einer oder mehrerer Rotorblattspitzen und/oder einer oder mehrerer Rotorblattflanschen mit den Positionen des ersten und/oder zweiten berechneten Mittelpunkts erfolgen. Alternativ oder zusätzlich kann das Bestimmen der Stellung der Rotorblätter aus den Normalenvektoren der Rotorblattflanschen erfolgen.

Die Berechnung des Nabendurchmesser, oder bspw. einer Abschätzung des Nabendurchmessers der Windkraftanlage kann aus dem Abstand der Positionen der Rotorblattflanschen erfolgen.

Durch die Bestimmung der Parameter kann ein Modell der Windkraftanlage aufgestellt werden, welches dazu genutzt werden kann vollautomatisierte oder autonome Inspektionsflüge durchzuführen. Darüber hinaus können durch die Bestimmung der Parameter Abweichungen von Soll- bzw. Normgeometrien erkannt werden.

Gemäß Ausführungsbeispielen der vorliegenden Offenbarung umfasst das Verfahren ferner ein Generieren oder Modifizieren eines Modells oder Parametrisieren eines generischen Modells, z.B. eines CAD (computer aided design, rechnerunterstütztes Kontruieren)-Modells, des Objekts mit den Positions- und/oder Lageinformationen der Merkmale, bspw. zur Bestimmung der Wegpunkte für den autonomen Flug. Durch das Aufstellen oder Anpassen eines Modells der Windkraftanlage kann bspw. ein folgender autonomer Inspektionsflug anhand des Modells stattfinden. Ferner ermöglicht ein Modell auch eine schnelle und kostengünstige Möglichkeit bspw. eine bekannte Änderung der Ausrichtung der Windkraftanlage einzupflegen, ohne erneute Objekterfassung.

Ausführungsbeispiele gemäß der vorliegenden Offenbarung schaffen ein Verfahren zur Inspektion eines Objekts, welches ein Abfliegen des Objekts entlang eines Pfades und ein Erfassen eines oder mehrerer Abschnitte des Objekts während des Abfliegens umfasst. Der Pfad basiert dabei auf einer Darstellung des Objekts durch die Merkmale oder Parameter, die durch eines oder mehrere der zuvor beschriebenen Verfahren erhalten werden.

Dadurch kann eine automatisierte Inspektion des Objekts ermöglicht werden. Durch den vorbestimmten Pfad kann sich beispielsweise der Drohnenpilot vollkommen auf die Überwachung des Drohnenflugs konzentrieren und muss nicht die Steuerung der Drohne übernehmen.

Gemäß Ausführungsbeispielen der vorliegenden Offenbarung ist die Auswerteeinrichtung Teil der Aufnahmeeinheit. Bei der Aufnahmeeinheit kann es sich um eine Drohne handeln, die die Auswertung selbst, oder bspw. in einer ihr zugehörigen Auswerteeinheit wie einem Rechenmodul durchführt. Damit kann eine zusätzliche Datenübertragung zur Auswertung, oder eine externe Auswerteeinrichtung wegfallen, was das System vereinfacht.

Gemäß Ausführungsbeispielen der vorliegenden Offenbarung ist die Auswerteeinrichtung dazu ausgelegt, die Merkmale in den Bildsätzen automatisiert zu erkennen und/oder die Positionen und/oder Lagen der Merkmale automatisiert zu bestimmen. Durch einen hohen Automatisierungsgrad kann ein offenbarungsgemäßes Verfahren schnell und kostengünstig durchgeführt werden. Dadurch kann auch die Anzahl menschlicher Fehler verringert werden.

Gemäß Ausführungsbeispielen der vorliegenden Offenbarung ist die Messeinrichtung dazu ausgelegt ist, mehrere Abschnitte des Objekts aus unterschiedlichen Positionen optisch zu erfassen. Eine optische Erfassung kann kostengünstig durch eine Kamera umgesetzt werden und ermöglicht bspw. die Anwendung einer Vielzahl bekannter Optimierungsverfahren zur Verbesserung der Aufnahmequalität, z.B. im Hinblick auf Gegenlicht.

### Figurenkurzbeschreibung

Beispiele gemäß der vorliegenden Offenbarung werden nachfolgend Bezug nehmend auf die beiliegenden Figuren näher erläutert. Hinsichtlich der dargestellten schematischen Figuren wird darauf hingewiesen, dass die dargestellten Funktionsblöcke sowohl als Elemente oder Merkmale der offenbarungsgemäßen Vorrichtung oder des offenbarungsgemäßen Systems als auch als entsprechende Verfahrensschritte des offenbarungsgemäßen Verfahrens zu verstehen sind, und auch entsprechende Verfahrensschritte des offenbarungsgemäßen Verfahrens davon abgeleitet werden können. Es zeigen:
- Fig. 1: ein Ablaufdiagramm zur Erfassung eines Objekts gemäß einem Ausführungsbeispiel der vorliegenden Offenbarung;
- Fig. 2: ein Ablaufdiagramm zur Erfassung eines Objekts mit zusätzlichen optionalen Schritten gemäß einem Ausführungsbeispiel der vorliegenden Offenbarung;
- Fig. 3: ein Ablaufdiagramm zur Erfassung einer Windkraftanlage gemäß einem Ausführungsbeispiel der vorliegenden Offenbarung;
- Fig. 4: eine schematische Seitenansicht einer Windkraftanlage mit einer schematischen Draufsicht eines Schnittes der Windkraftanlage und einer Bewegungstrajektorie der Aufnahmeeinheit gemäß einem Ausführungsbeispiel der vorliegenden Offenbarung;
- Fig. 5: eine schematische Seitenansicht einer Windkraftanlage mit einer schematische Draufsicht eines Schnittes der Windkraftanlage gemäß einem Ausführungsbeispiel der vorliegenden Offenbarung;
- Fig. 6: eine schematische Draufsicht einer Windkraftanlage gemäß einem Ausführungsbeispiel der vorliegenden Offenbarung;
- Fig. 7: eine schematische Darstellung eines beispielhaften Informationsflusses zwischen Echtzeit Kinematik System, Aufnahmeeinheit, Auswerteeinrichtung und Kommunikationseinheit gemäß einem Ausführungsbeispiel der vorliegenden Offenbarung;
- Fig. 8: eine schematische Seitenansicht einer Windkraftanlage mit einer beispielhaften Reihenfolge der Erfassung der Aufnahmeeinheit gemäß einem Ausführungsbeispiel der vorliegenden Offenbarung;
- Fig. 9: eine schematische Seitenansicht einer Windkraftanlage mit beispielhaften Merkmalen gemäß einem Ausführungsbeispiel der vorliegenden Offenbarung; und
- Fig. 10: eine schematische Seitenansicht eines Krans mit beispielhaften Merkmalen gemäß einem Ausführungsbeispiel der vorliegenden Offenbarung.

### Detaillierte Beschreibung der Beispiele gemäß den Figuren

Bevor nachfolgend Beispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen oder ähnlichen Bezugszeichen versehen sind, so dass die in unterschiedlichen Beispielen dargestellte Beschreibung dieser Elemente untereinander austauschbar ist bzw. aufeinander angewendet werden kann.

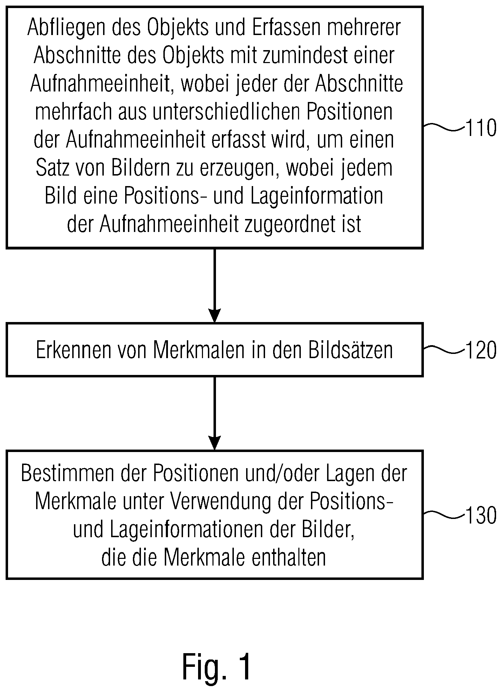

Fig. 1 zeigt ein Ablaufdiagramm zur Erfassung eines Objekts gemäß einem Ausführungsbeispiel der vorliegenden Offenbarung. Fig. 1 zeigt einen Schritt 110, der ein Abfliegen des Objekts und Erfassen mehrerer Abschnitte des Objekts mit zumindest einer Aufnahmeeinheit umfasst, wobei jeder der Abschnitte mehrfach aus unterschiedlichen Positionen der Aufnahmeeinheit erfasst wird, um einen Satz von Bildern zu erzeugen, wobei jedem Bild eine Positions- und Lageinformation der Aufnahmeeinheit zugeordnet ist. Anschließend erfolgt in Schritt 120 ein Erkennen von Merkmalen in den Bildsätzen und in Schritt 130 ein Bestimmen der Positionen und/oder Lagen der Merkmale unter Verwendung der Positions- und Lageinformationen der Bilder, die die Merkmale enthalten.

Das Abfliegen des Objekts kann dabei manuell, z.B. durch einen Drohnenpiloten, oder automatisiert, bzw. autonom erfolgen. Bei den Abschnitten des Objekts kann es sich um Teile des Objekts handeln, welche charakteristische Merkmale aufweisen. Die Positions- und Lageinformation kann Koordinaten- und/oder Ortsinformation, bzw. Ausrichtungs-, und/oder Orientierungsinformation umfassen. Weitere Informationen können dabei ebenfalls dem Bild zugeordnet sein, bspw. der Öffnungswinkel der Aufnahmeeinheit oder bspw. die Anzahl der Pixel. Das Erkennen von Merkmalen kann automatisiert erfolgen, oder manuell durchgeführt werden. Bspw. kann eine KI (Künstliche Intelligenz), oder ein anderer Ansatz aus dem Bereich des maschinellen Lernens verwendet werden. Die Merkmalserkennung kann von einer Auswerteeinrichtung durchgeführt werden. Dabei kann es sich um einen zusätzlichen Rechner, oder eine cloudbasierte Rechnerstruktur handeln. Die Auswertung kann direkt nach oder während des Abfliegens erfolgen, oder auch zeitlich und örtlich versetzt.

Durch das Bestimmen der Positionen und/oder Lagen der Merkmale aus den Positions- und Lageinformationen der Bilder, die die Merkmale enthalten, kann ein schwer zugängliches, zu erfassendes Objekt, mit geringem Zeitaufwand, und mit bspw. minimaler Gefährdung von Menschen erfasst werden. Anstelle von Kletterern kann eine Drohne Bildaufnahmen machen, mit Hilfe derer ein Modell des Objekts erstellt werden kann. Anhand des Modells können dann folgend vollautomatisierte oder autonome Inspektionsflüge durchgeführt werden. Durch die Aufnahme eines Satzes von Bildern können Bildauswertungsverfahren, z.B. zum Generieren von Tiefeninformation, angewendet werden. Darüber hinaus ermöglicht eine statistische Auswertung von Ergebnissen, welche sich aus der Auswertung einzelner Bilder ergeben, die Angabe von Ergebnisgüten, womit z.B. ein Maß für die Genauigkeit des Modells geschaffen werden kann. Dadurch kann entschieden werden in welchem Abstand eine Drohne zu dem Objekt fliegen muss, um eine Kollision möglichst sicher zu vermeiden. Je besser die Modellgüte, desto näher könnte sich eine Drohne automatisiert nähern, um besonders hochauflösende Bilder des Objekts zu machen, anhand derer eine umfassende Auswertung, z.B. bezüglich Haarrissen, erfolgen kann.

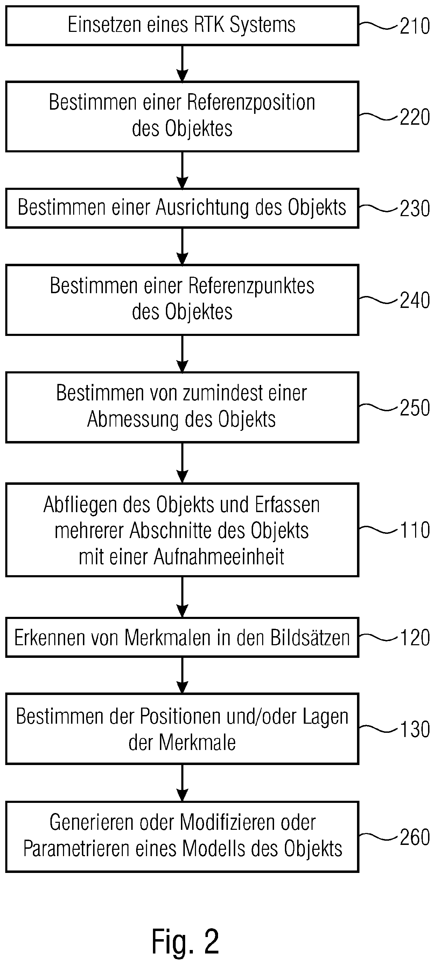

Fig. 2 zeigt ein Ablaufdiagramm zur Erfassung eines Objekts mit zusätzlichen optionalen Schritten gemäß einem Ausführungsbeispiel der vorliegenden Offenbarung. Die notwendigen Schritte in Fig. 2 entsprechen dabei den Schritten aus Fig. 1.

Fig. 2 zeigt zusätzlich Schritt 210, welcher ein Einsetzen eines Echtzeit Kinematik, RTK; Systems umfasst, zur Korrektur der Positions- und Lageinformation der Aufnahmeeinheit.

Durch das RTK System kann die Genauigkeit der Positionsbestimmung verbessert werden, ohne aufwändige Technik zur Positionsbestimmung in die Aufnahmeeinheit zu integrieren.

Schritt 220 umfasst ein Bestimmen einer Referenzposition des Objektes. Die Referenzposition wird durch Auswerten einer Menge von Positionsinformationen der Aufnahmeeinheit, wobei die Menge von Positionsinformationen aus einer Bewegungstrajektorie der Aufnahmeeinheit stammt, bestimmt. Die Referenzposition kann zum Beispiel der Objektmittelpunkt sein. Dadurch kann die Aufnahmeeinheit automatisiert zur Position des Objektes fliegen, um es z.B. optisch zu erfassen.

Schritt 230 umfasst ein Bestimmen einer Ausrichtung des Objektes. Die Ausrichtung wird durch eine Auswertung der, bspw. zuvor bestimmten, Referenzposition des Objektes und einer Positionsinformation der Aufnahmeeinheit bestimmt, wobei die Aufnahmeeinheit zum Zeitpunkt der Aufnahme der Positionsinformation entsprechend der Ausrichtung des Objektes positioniert ist. Die Aufnahmeeinheit kann auf einer Verbindungslinie zwischen Aufnahmeeinheit und Referenzposition, bspw. dem Objektmittelpunkt, die rechtwinklig zur Vorderseite des Objektes ist, platziert werden und aus der Referenzposition und der Position der Aufnahmeeinheit kann die Ausrichtung, bspw. Lage oder Orientierung des Objekts berechnet werden. Die Bestimmung der Orientierung kann bei beweglichen Objekten, wie einer Windkraftanlage oder einem Kran wichtig sein, da sie sich zwischen zwei Inspektion verändert haben kann. Ein Vorteil der offenbarungsgemäßen Bestimmung der Ausrichtung liegt darin, dass kein zusätzlicher Aufwand auf eine Justierung der Ausrichtung des Objekts verwendet werden muss. Bspw. muss die Gondel eines Windrads nicht erst für ein Verfahren auf einen bestimmte Ausrichtung gebracht werden. Ein Kran in einem Wohngebiet zwischen Hochhäusern, kann bspw. nicht strikt Richtung Norden geschwenkt werden, weil dort z.B. bereits ein Gebäude oder ein anderer Kran steht. Das offenbarungsgemäße Verfahren kann somit Zeit und Ressourcen sparen und gleichzeitig für einen breiten Anwendungsbereich geeignet sein.

Der weitere Schritt 240 umfasst ein Bestimmen eines Referenzpunktes des Objekts. Dies erfolgt durch Platzieren der Aufnahmeeinheit auf dem Referenzpunkt und anschließendem Auswerten der Positionsinformation der Aufnahmeeinheit. Bei dem Referenzpunkt kann es sich um einen Punkt aus dem zwei- oder dreidimensionalen Raum, aber auch um einen skalare Größe, bspw. eine Höhe über Normal-Null handeln. Damit kann eine Bezugshöhe für ein anschließendes Abfliegen des Objekts mit der Aufnahmeeinheit bestimmt werden. Die Aufnahmeeinheit kann zum Beispiel am tiefsten Punkt des Objekts platziert werden, um anschließend, bei bspw. bekannter Höhe des Objekts, das Objekt entlang seiner gesamten Höhe automatisiert abzufliegen.

Der weitere Schritt 250 umfasst ein Bestimmen von zumindest einer Abmessung des Objekts. Die Abmessung wird durch die Auswertung eines Referenzpunktes des Objektes, und der Position eines oder mehrerer der Merkmale bestimmt. Anhand des z.B. zuvor bestimmten Referenzpunktes kann in Form einer Referenzhöhe, die Höhe des Objekts durch Auswerten der Position des höchsten Punkts des Objekts bestimmt werden. Offenbarungsgemäß sind hierbei auch weitere Anwendungen denkbar. So kann bspw. eine laterale Ausdehnung, z.B. eines Containerschiffs, das bspw. ausgeschlachtet werden soll, mit Hilfe einer Drohne und eines Referenzpunktes, z.B. in Form des äußersten Punktes des Bugs, und einer Bestimmung der Position des äußersten Punktes des Schiffes achtern bestimmt werden. Dadurch kann ein mehrere hundert Meter langes Schiff schnell vermessen werden, um z.B. ideale Schnittebenen für die Zerlegung festzulegen.

Die weiteren Schritte 110, welcher ein Abfliegen des Objekts und Erfassen mehrere Abschnitte des Objekts mit zumindest einer Aufnahmeeinheit umfasst, 120, welcher ein Erkennen von Merkmalen in den Bildsätzen umfasst und 130, welcher ein Bestimmen der Positionen und/oder Lagen der Merkmale umfasst entsprechen den Schritten aus Fig. 1. Zur genaueren Beschreibung wird daher auf die Beschreibung von Fig. 1 verwiesen.

Bei Ausführungsbeispielen kann der Schritt 250 auch die Schritte 110, 120 und 130 beinhalten. Schritt 250 kann aber auch vor der Ausführung, oder einer erneuten Ausführung der Schritte 110, 120 und 130, mit oder ohne die Schritte erfolgen. Die Ausführung der Schritte 110, 120 und 130 kann beispielweise eine Möglichkeit für die Bestimmung der Position eines oder mehrerer der Merkmale von Schritt 250 sein. Bei bekannter Position kann eine Ausführung der Schritte 110, 120 und 130 zur Bestimmung von zumindest einer Abmessung des Objekts auch ausgelassen werden. Das Auslassen der Schritte 110, 120 und 130 zur Bestimmung der Abmessung schließt aber keineswegs eine Ausführung der Schritte zur Bestimmung von Positionen und/oder Lagen bspw. anderer Merkmale aus.

Der weitere Schritt 260 umfasst ein Generieren oder Modifizieren eines Modells, oder Parametrisieren eines generischen Modells, z.B. CAD-Modells des Objekts, bspw. zur Bestimmung von Wegpunkten für einen autonomen Flug. Das Modell kann mit den Positions- und/oder Lageinformationen der Merkmale aufgestellt werden. Durch das Modell des Objekts, können anschließende Drohnenflüge bspw. automatisiert oder autonom durchgeführt werden. Damit kann bspw. eine erhebliche Zeitersparnis bei der Inspektion des Objekts erzielt werden.

Die gezeigten Schritte, 210 - 250 und 260 sind dabei als jeweils optional zu verstehen. Beispielsweise kann bei bekannter Referenzposition, Schritt 220 ausgelassen werden, Schritt 230, das Bestimmen einer Ausrichtung des Objekts, kann dann trotzdem mit der bekannten Referenzposition erfolgen. Umgekehrt kann eine Bestimmung der Ausrichtung mit Schritt 230 ausgelassen aber die Referenzposition mit Schritt 220 bestimmt werden.

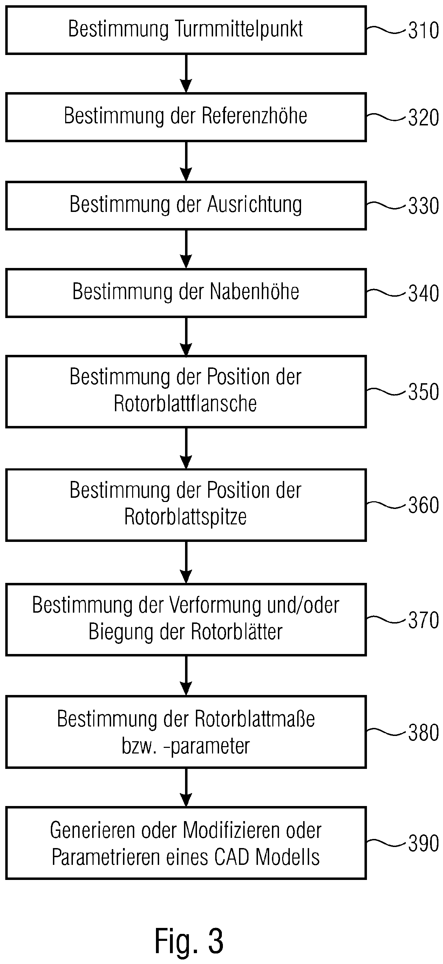

Fig. 3 zeigt ein Ablaufdiagramm zur Erfassung einer Windkraftanlage gemäß einem Ausführungsbeispiel der vorliegenden Offenbarung. Fig. 3 zeigt bspw. einen Ablauf zur Erzeugung eines Kalibrierungsdatensatzes von einer Windkraftanlage für den autonomen Flug einer Drohne entlang einer Windkraftanlage.

Schritt 310 umfasst eine Bestimmung des Turmmittelpunkts der Windkraftanlage. Die Bestimmung des Turmmittelpunktes umfasst ein zumindest teilweises Umrunden des Turms entlang der äußeren Wand des Turms mit der Aufnahmeeinheit und ein Aufzeichnen der Positionen der Aufnahmeeinheit beim Umrunden des Turms. Ferner erfolgt eine Bildung von Positionsteilmengen aus jeweils drei Punkten, wobei die drei Punkte einen vorbestimmten, z.B. möglichst gleichen, Abstand zueinander aufweisen. Darüber hinaus kann eine Bestimmung einer Menge von Schwerpunkten von Dreiecken aus einer Mehrzahl der Positionsteilmengen, wobei jedes Dreieck aus den drei Punkten einer Positionsteilmenge gebildet wird, erfolgen. Dabei erfolgt eine Berechnung des Mittelpunkts des Turms, aus dem Durchschnitt der Schwerpunkte. Alternativ oder zusätzlich kann eine Bestimmung einer Menge von Kreismittelpunkten aus einer Mehrzahl der Positionsteilmengen erfolgen, wobei jeder Kreismittelpunkt aus den drei Punkten einer Positionsteilmenge, mit Hilfe der allgemeinen Kreisgleichung, bestimmt wird. Dabei erfolgt die Berechnung des Mittelpunkts des Turms aus der Menge der Kreismittelpunkte. Alternativ oder zusätzlich kann eine Bestimmung einer Menge von Umkreismittelpunkten aus einer Mehrzahl der Positionsteilmengen erfolgen, wobei jeder Umkreismittelpunkt der Mittelpunkt eines Umkreises eines Dreiecks ist, welches aus den drei Punkten einer Positionsteilmenge gebildet ist. Dabei erfolgt das Berechnen des Mittelpunkts des Turms aus der Menge der Umkreismittelpunkte.

In anderen Worten kann der Turmmittelpunkt durch die Aufnahmeeinheit, wie bspw. eine Drohne bestimmt werden. Aufgrund unbekannter, oder nur ungenau bekannter geografischer Koordinaten der Windkraftanlage, kann eine Bestimmung des Turmmittelpunkts der Windkraftanlage notwendig sein, um einen Flugweg der Drohne entlang der Windkraftanlage zu kalibrieren, z.B. für einen autonomen Flug. Durch das offenbarungsgemäße Verfahren kann dazu eine bspw. zentimetergenaue Bestimmung des Turmmittelpunkts erfolgen. Ein bspw. einmaliges Umlaufen bzw. Umrunden des Turms mit der Aufnahmeeinheit kann die Aufzeichnung der Bewegungstrajektorie der Aufnahmeeinheit bilden. Der Abstand vom Turm und die Geschwindigkeit der Umrundung, z.B. langsam, können so gewählt werden, dass eine ausreichende Signalstärke, bspw. zwischen der Drohne und einem Echtzeit Kinematik System zur Verbesserung der Positionsgenauigkeit, oder zwischen der Drohne und einer Kommunikationseinheit, bspw. einer Remote Console (Fernsteuerungskonsole) besteht. Bei Windkraftanlagen kann das Umrunden auf dem Fundamentsockel stattfinden, für den Fall von offshore Windkraftanlagen kann das Umrunden auch auf der Gangway der Windkraftanlage erfolgen. Dabei wird bei der Auswertung der Höhenunterschied der Gangway, z.B. zwischen der Gangway und der Fundamentoberkante oder dem Wasserspiegel mitberücksichtigt. Die Berechnung des Turmmittelpunkts erfolgt aus einer Reihe von aufgezeichneten Positionsinformationen, bzw. Positionen wie bspw. GPS Stützpunkten. Es können drei Punkte aus den Positionsinformationen der Bewegungstrajektorie ausgewählt werden, welche einen vorbestimmten, z.B. ähnlichen, oder möglichst gleichen Abstand zueinander aufweisen, sodass die drei Punkte, ein bspw. gleichseitiges Dreieck bilden. Aus diesen drei Punkten kann dann der Mittelpunkt, bzw. der Schwerpunkt des Dreiecks berechnet werden. Die Berechnung von Mittelpunkten aus jeweils drei Punkten mit ähnlichem Abstand zueinander kann für mehrere, oder bspw. alle, aufgezeichneten Positionsinformationen durchgeführt werden. Aus den ermittelten Mittelpunkten, bzw. Schwerpunkten kann der Durchschnitt berechnet werden, um den Turmmittelpunkt, bzw. das Zentrum zu berechnen. Alternativ oder zusätzlich zur Bestimmung des Turmmittelpunks über die Schwerpunkte der Dreiecke können aus den jeweils drei Punkten für mehrere oder bspw. alle aufgezeichneten Positionsinformationen Kreismittelpunkte aus der allgemeinen Kreisgleichung auf Grundlage der jeweils drei Punkte oder Umkreismittelpunkte aus den Umkreisen von Dreiecken, welche aus den jeweils drei Punkten gebildet sind, bestimmt werden.

Der Schritt 320 umfasst eine Bestimmung der Referenzhöhe bzw. des Basements (Fundaments) der Windkraftanlage. Die Bestimmung erfolgt durch Platzieren der Aufnahmeeinheit auf der Referenzhöhe, z.B. auf einem beliebigen Punkt auf dem Basement, oder bspw. dem Referenzpunkt und anschließendem Auswerten der Positionsinformation der Aufnahmeeinheit.

Die Bestimmung der Referenzhöhe kann die zweite Messung an der Windkraftanlage, bzw. am Windrad bilden. Die Referenzhöhe kann ein Beispiel für einen eindimensionalen Referenzpunkt sein. Beispielsweise ist der Referenzpunkt eine Höhe über Normal Null, welche eine Höhenreferenz, bzw. Referenzhöhe für die Windkraftanlage bildet. Die Bestimmung der Referenzhöhe, bspw. als Bestimmung der Höhe als Nullpunkt kann zu einer folgenden weiteren Bestimmung der Turmhöhe des unteren Flansches oder Betonkante des Turms genutzt werden. Das Platzieren der Aufnahmeeinheit auf der Referenzhöhe kann das Abstellen der Aufnahmeeinheit, bspw. einer Drohne, auf der Fundamentoberkante der Windkraftanlage umfassen. Das Abstellen der Aufnahmeeinheit kann nach einem vorigen, z.B. einmaligen Umlaufen der Fundamentoberkante erfolgen. Die Aufnahmeeinheit kann GPS oder ein Positionierungssystem wie bspw. Preciwave aufweisen. Bei Offshore Windkraftanlagen kann die Referenzhöhe auch die Höhe der Gangway, um den Bereich zwischen Fundament und unteren Turmflansch bilden. In anderen Worten kann anstelle der Fundamentoberkante die Gangway zur Bestimmung der Referenzhöhe verwendet werden. In diesem Fall kann für die Referenzhöhe bzw. weitere Schritte, welche auf Grundlage der Referenzhöhe erfolgen, die Differenz der Höhe, bspw. zwischen Gangway und Fundament, oder Gangway und Wasseroberfläche, mitberücksichtigt werden.

Der weitere Schritt 330 umfasst die Bestimmung der Ausrichtung der Windkraftanlage. Die Bestimmung der Ausrichtung erfolgt durch eine Auswertung einer Referenzposition, bspw. des Turmmittelpunkts der Windkraftanlage und einer Positionsinformation der Aufnahmeeinheit, bspw. einer Drohne, wobei die Aufnahmeeinheit zum Zeitpunkt der Aufnahme der Positionsinformation entsprechend der Ausrichtung der Windkraftanlage positioniert ist.

Die Bestimmung der Ausrichtung der Windkraftanlage kann die dritte Messung an der Windkraftanlage bilden. Bei der Ausrichtung der Windkraftanlage kann es sich um die Ausrichtung der Gondel der Windkraftanlage handeln. Die Aufnahmeeinheit kann entsprechend der Ausrichtung der Gondel, also bspw. so, dass die Verbindungslinie zwischen der Drohne und der Gondel rechtwinklig zu den Rotorblättern angeordnet ist, vor der Windkraftanlage platziert werden. Aus einer bekannten Referenzposition der Windkraftanlage, wie bspw. dem Turmmittelpunkt und der Position der Aufnahmeeinheit kann die Ausrichtung der Gondel bestimmt werden. Bei der Ausrichtung kann es sich um den Azimut oder das Heading der Gondel bzw. Windkraftanlage handeln, welche z.B. relativ zur Nord Richtung oder aber auch eines anderen Bezugspunktes ermittelt wird. Ist nur eine ungefähre Bestimmung der Ausrichtung notwendig, kann die Bestimmung der Position für die Aufnahmeeinheit z.B. fußläufig durchgeführt werden, wobei die Aufnahmeeinheit vor der Windkraftanlage, entsprechend der Ausrichtung der Gondel kurz abgestellt werden kann, für die Bestimmung der bspw. GPS Position der Aufnahmeeinheit. Nach der Bestimmung der Ausrichtung kann sich ein Kalibrierungsflug anschließen.

Der weitere Schritt 340 umfasst die Bestimmung der Nabenhöhe der Windkraftanlage. Die Bestimmung der Nabenhöhe erfolgt durch die Auswertung des Referenzpunktes, z.B. der Höhe als Nullpunkt, und der Position eines oder mehrerer der Merkmale.

In anderen Worten kann, bspw. nach der Bestimmung des Turmmittelpunktes, der Referenzhöhe und der Ausrichtung der Windkraftanlage die Nabenhöhe bestimmt werden. Bei Vorliegen einer a priori Information für die Nabenhöhe kann diese auch verifiziert werden. Die Aufnahmeeinheit, bspw. Drohne kann zur Nabe der Windkraftanlage fliegen und die Nabenspitze fotografieren. Der Abstand der Aufnahmeeinheit zur Windkraftanlage kann unterhalb eines festgelegten Schwellwertes, z.B. unter 20m erfolgen. Der Anflug der Aufnahmeeinheit kann automatisch, z.B. durch die Bestimmung von Wegpunkten (Waypoints) durchgeführt werden, wenn die ungefähre Nabenhöhe vor dem Flug bekannt ist. Der Anflug der Aufnahmeeinheit kann ferner manuell, bspw. von Hand erfolgen, sodass die Aufnahmeeinheit mit einer, bzw. der Fernsteuerung der Aufnahmeeinheit auf Höhe der Nabenspitze geflogen wird. Die Auswertung der Bilder, bspw. das Erkennen des Merkmals Nabenspitze auf den Bildern, kann manuell, bspw. von Hand oder automatisiert erfolgen, bspw. durch eine künstliche Intelligenz (KI).

Der weitere Schritt 350 umfasst eine Bestimmung der Position der Rotorblattflansche. Die Bestimmung der Position der Rotorblattflansche umfasst eine Bestimmung einer ersten Gerade zwischen der Position eines ersten, in einem Bild identifizierten Punktes des Rotorblattflansches, kurz Flanschpunkt, und der Position der Aufnahmeeinheit und einer zweiten Gerade zwischen der Position eines zweiten, dem ersten Punkt gegenüberliegenden, in demselben Bild identifizierten Punktes des Rotorblattflansches und der Position der Aufnahmeeinheit. Dabei können zur Bestimmung der ersten und zweiten Geraden neben der Position der Aufnahmeeinheit zum Zeitpunkt der Aufnahme des Bildes und den identifizierten Positionen der Punkte der Rotorblattflansche ferner auch die Lage der Aufnahmeeinheit zum Zeitpunkt der Aufnahme des Bildes, sowie Eigenschaften der Aufnahmeeinheit mitberücksichtigt werden. Ferner wird eine weitere Gerade bestimmt, die in der Mitte zwischen der ersten und zweiten Gerade verläuft. Eine Mehrzahl weiterer Geraden wird für einen Satz von Bildern des Rotorblattflansches bestimmt und aus der Mehrzahl der weiteren Geraden wird die Position, bspw. der Mittelpunkt des Rotorblattflansches oder kurz Flanschmittelpunkt bestimmt.

Der Schritt kann ferner auch die Bestimmung der Lage der Rotorblattflansche umfassen. Die Bestimmung der Lage der Rotorblattflansche umfasst ein Identifizieren zweier gegenüberliegender Punkte des Rotorblattflansches in einem Bild, wobei ein Richtungsvektor einer Verbindungsgerade zwischen den Positionen der beiden gegenüberliegenden Punkte des Rotorblattflansches bestimmt wird. Dabei wird eine Mehrzahl von Richtungsvektoren von Verbindungsgeraden für einen Satz von Bildern des Rotorblattflansches bestimmt und aus der Mehrzahl der Richtungsvektoren der Verbindungsgeraden wird durch paarweise Bildung des Kreuzproduktes der Richtungsvektoren der Verbindungsgeraden eine Menge von möglichen Normalenvektoren des Rotorblattflansches berechnet. Aus der Menge der möglichen Normalenvektoren wird ein Normalenvektor des Rotorblattflansches berechnet.

In anderen Worten kann zur Bestimmung der Position und Lage der Rotorblattflansche, ein Rotorblattflansch, oder kurz Flansch, als kreisförmiges Gebilde, bspw. als Kreis gesehen oder approximiert werden, welcher eine Position im Raum, bspw. einen Mittelpunkt und eine Lage im Raum, bspw. eine Orientierung aufweist. Der Kreis wird im Folgenden als Flanschkreis bezeichnet. Zur Bestimmung der Position des Rotorblattflansches kann ein ähnliches Verfahren wie bei der Bestimmung der Position der Rotorblattspitzen verwendet werden. Für jedes Bild und Flansch können zwei Strahlen im Raum, bzw. mathematische Geraden, berechnet werden. Diese berühren den Flanschkreis an zwei gegenüberliegenden Punkten und schneiden sich, bspw. exakt, in der Position der Aufnahmeeinheit, bspw. der Kamera der Aufnahmeeinheit. Es kann ein Strahl berechnet werden, der genau in der Mitte der beiden zuvor berechneten zwei Strahlen verläuft. Dieser kann dann durch den Mittelpunkt des Flanschkreises gehen. Aus diesen Mittelpunktstrahlen pro Bild und Flansch, kann bspw. ähnlich wie bei der Bestimmung der Position der Rotorblattspitzen, bzw. ähnlich wie bei den Flügelspitzen, die Position des Flanschmittelpunktes ermittelt werden.

Die offenbarungsgemäße Bestimmung der Lage der Flansche im Raum beruht bei Ausführungsbeispielen auf der Idee, dass die Lage eines Kreises im Raum durch den Normalenvektor der Kreisebene bestimmt ist, bzw. angegeben werden kann. Bei den Flanschs kann dieser Normalenvektor auch der Richtungsvektor sein, mit dem das Rotorblatt, bspw. der Flügel die Nabe verlässt. Eine weitere Idee des Verfahrens besteht darin, dass davon ausgegangen werden kann, dass die vom Benutzer, oder einer automatisierten Auswertung bestimmten zwei Bildpunkte pro Flansch und Bild in einer zur Bildebene parallelen Ebene liegen. Dadurch kann, z.B. unter der Annahme einer beliebigen solchen Ebene, der Richtungsvektor der Verbindungsgeraden durch beide Punkte berechnet werden. Da solche, bspw. alle, Richtungsvektoren auch in der Kreisebene des Flanschs liegen, kann daraus der Normalenvektor der Kreisebenen berechnet werden. Dazu kann auf die Richtungsvektoren paarweise das Kreuzprodukt angewendet werden, und die Ergebnisse mit statistischen Methoden zu einem einzigen Normalenvektor und einer Ergebnisgüte reduziert werden.

Ferner kann im Schritt 350 der Flanschdurchmesser bestimmt werden. Aus dem bspw. zuvor bestimmten Flanschmittelpunkt kann ermittelt werden, in welcher zur Bildebene parallelen Ebenen sich die beiden identifizierten Flanschpunkte befinden. Daraus kann der Abstand beider Punkte berechnet werden. Aus dem Abstand beider Punkte kann im Mittel der Flanschdurchmesser berechnet werden, das Mitteln kann bspw. über eine Mehrzahl von Abständen von jeweils zwei Flanschpunkten des Rotorblattflanschs aus einem Satz von Bildern, welche den Rotorblattflansch aufweisen, und bei denen jeweils zwei Punkte des Rotorblattflansches identifiziert wurden, erfolgen.

In anderen Worten kann zusammengefasst, das Bestimmen der Position der Rotorblattflansche, bspw. der Flügelansätze der Windkraftanlage das Fotografieren der Flansche umfassen. Ferner können neben der Position der Rotorblattflansche, die Größe und Breite des Rotorblattflansches, bspw. durch den Flanschdurchmesser, sowie die Rotorblattneigung zum Turm, bspw. durch die Normalenvektoren des Rotorblattflansches bestimmt werden.

Der Schritt 360 umfasst die Bestimmung der Position der Rotorblattspitze bzw. der Spitze des Rotorblattes. Die Bestimmung der Position der Rotorblattspitze umfasst ein Bestimmen einer Gerade zwischen der, in einem Bild identifizierten, Position der Rotorblattspitze und der zugehörigen Position der Aufnahmeeinheit. Dabei können zur Bestimmung der Gerade neben der Position der Aufnahmeeinheit zum Zeitpunkt der Aufnahme des Bildes und der identifizierten Position der Rotorblattspitze ferner auch die Lage der Aufnahmeeinheit zum Zeitpunkt der Aufnahme des Bildes, sowie Eigenschaften der Aufnahmeeinheit mitberücksichtigt werden. Ferner wird eine Mehrzahl von Geraden für einen Satz von Bildern der Rotorblattspitze bestimmt und die Mehrzahl von Geraden wird paarweise ausgewertet. Für jedes Geradenpaar wird ein Schnittpunkt berechnet und aus einer Menge der Schnittpunkte der Geradenpaare wird die Position der Rotorblattspitze berechnet.

In anderen Worten kann in diesem Schritt die Position der Rotorblattspitze, bspw. der Blattspitzen, oder Flügelspitzen bestimmt, oder, falls Informationen bzgl. Positionen der Rotorblattspitzen vorliegen, verifiziert werden. Die Aufnahmeeinheit bspw. Drohne kann zu den Rotorblattspitzen fliegen und diese fotografieren. Der Abstand der Aufnahmeeinheit zur Windkraftanlage kann unterhalb eines Schwellwerts, bspw. unterhalb von 20m liegen. Der Anflug der Aufnahmeeinheit kann bei bekannter Nabenhöhe und bekannter Rotorblattlänge durch die Bestimmung der anzufliegenden Position der Rotorblattspitze durch ein Wegpunktverfahren, z.B. automatisiert oder autonom erfolgen. Der Anflug der Aufnahmeeinheit kann auch manuell, bspw. von Hand erfolgen, z.B. entsprechend Schritt 340.

Die Bestimmung der Positionen der Rotorblattspitzen, bzw. Flügelspitzen, kann die Berechnung eines Strahls, bzw. einer mathematischen Geraden im Raum für jedes Bild umfassen. Die Berechnung des Strahls kann unter Verwendung der Position und Ausrichtung der Aufnahmeeinheit, bspw. der Kamera der Aufnahmeeinheit, der Eigenschaften der Aufnahmeeinheit, z.B. Öffnungswinkel und Anzahl der Pixel einer Kamera der Aufnahmeeinheit und der identifizierten Position der Rotorblattspitze im Bild erfolgen. Die mit diesen Daten berechneten Strahlen einer Rotorblattspitze könnten sich bei idealen Bedingungen, bspw. bei exakt bekannten optischen Parametern und fehlerfrei identifizierten Positionen der Rotorblattspitzen, z.B. alle an derselben Position, bspw. am selben Ort, der Position der Rotorblattspitze treffen. Um beispielsweise auch bei nichtidealen Bedingungen eine gute Berechnung der Position der Rotorblattspitze zu ermöglichen können gemäß der vorliegenden Offenbarung, z.B. alle, Strahlen, bspw. einer Rotorblattspitze paarweise verglichen werden. Dabei kann jeweils ein näherungsweiser Schnittpunkt, z.B. der Mittelpunkt der kürzesten Verbindungslinie berechnet werden. Schlechte Strahlenpaare, z.B. Strahlenpaare die nicht zu einem sinnvollen Ergebnis für die Position der Rotorblattspitze führen, können aussortiert, also z.B. nicht mitberücksichtigt werden. Eine Möglichkeit zur Erkennung schlechter Strahlenpaare kann ein Vergleich des Schnittpunkts mit der Bildaufnahme bilden. Schneidet sich ein Strahlenpaar außerhalb des Bildbereichs, so kann dieser Schnittpunkt bspw. verworfen werden, wenn die Rotorblattspitze innerhalb des Bereichs des Bildes korrekt identifiziert wurde. Aus den Schnittpunkten kann eine Punktewolke, bspw. eine Menge oder Mehrzahl von Schnittpunkten aufgestellt werden, aus welcher mit statistischen Methoden ein Mittelpunkt und eine Ergebnisgüte berechnet werden kann. Der berechnete Mittelpunkt kann die Position der Rotorblattspitze beschreiben.

Alternativ oder zusätzlich kann eine Bestimmung der Positionen der Rotorblattspitzen, bspw. Tipspitzen, folgendermaßen durchgeführt werden:
Ausgangspunkt kann die, wie bspw. zuvor erläutert bestimmte, Menge von Geraden zwischen der, in einem Bild identifizierten, Position der Rotorblattspitze und der zugehörigen Position der Aufnahmeeinheit im dreidimensionalen Raum bilden, deren Schnittpunkt bspw. die Position der Rotorblattspitze bestimmt. In einfachen Worten haben wir eine Anzahl von Strahlen in 3D deren "Schnittpunkt" gesucht wird.

Bei der praktischen Auswertung können einige oder mehrere dieser Geraden oder Strahlen windschief sein und somit über keinen gemeinsamen Schnittpunkt verfügen. Anders ausgedrückt können die Strahlen in der Realität windschief sein und sich in keinem Punkt schneiden. Daher kann stattdessen ein Punkt P gesucht werden, der einem "Schnittpunkt" am nächsten kommt.

Dazu können zwei Definition verwendet werden und bspw. die entsprechenden Verarbeitungsschritte durchgeführt werden:
"Minimaler Abstand": Der minimale Abstand eines 3D Punktes zu einem Strahl oder bspw. einer Geraden, ist die Länge der Lotstrecke zwischen Punkt und Strahl oder bspw. Punkt und Gerade.

"Summe der Quadrate der minimalen Abstände": Für die gegebenen Strahlen werden jeweils die minimalen Abstände zu einem Punkt berechnet und quadriert. Dann wird die Summe über diese quadrierten Abstände gebildet.

Der gesuchte Punkte ist dann genau derjenige Punkt der die Summe der Quadrate der minimalen Abstände minimiert.

Beispielsweise mit Hilfe eines Optimierungsalgorithmus, z.B. mit dem "Limited-memory Broyden-Fletscher-Goldfarb-Shanno" Algorithmus (L-BFGS) kann der Punkt P bestimmt werden.

Beispielsweise kann der Punkt P wiederum als Ergebnis für die Position der Rotorblattspitze verwendet werden.

Der weitere Schritt 370 umfasst eine Bestimmung der Verformung und/oder Biegung der Rotorblätter. Die Bestimmung der Verformung und /oder Biegung der Rotorblätter erfolgt durch eine Approximation des Verlaufs der Rotorblätter mit einer mathematischen Funktion, bspw. linear, exponentiell oder logarithmisch.

In anderen Worten kann die Bestimmung der Verformung und/oder Biegung der Rotorblätter, bspw. des Bendings, durch ein generisches mathematisches Verfahren erfolgen. Die Verformung kann dabei eine Verformung ab der zweiten Rotorblatthälfte umfassen. Durch die Bestimmung der Position der Rotorblattflansche, bspw. gemäß Schritt 350 und der Bestimmung der Position der Rotorblattspitze, bspw. gemäß 360, kann der reale Verlauf des Rotorblattes bzw. des Flügels angenähert werden.

Der weitere Schritt 380 umfasst eine Bestimmung der Rotorblattmaße bzw. -parameter. Der Schritt kann eine Bestimmung der größten Rotorblattdicke, und/oder eine Bestimmung der größten Rotorblattbreite, umfassen. Die Rotorblattdicke, und/oder. Rotorblattbreite kann bei gleichzeitiger Bestimmung des Abstands vom Rotorblattflansch bestimmt werden. Die Bestimmung der Rotorblattmaße kann, nach der Bestimmung der Position der Rotorblattspitze und der Position des Rotorblattflansches und dessen Durchmessers, ferner die Bestimmung beliebiger Positionen, bspw. gemäß Schritt 360, umfassen. Dazu können zwei gegenüberliegende Punkte auf den Rotorblattkanten, bspw. Blattkanten, ausgewählt werden, sodass eine daraus resultierende Abstandsbestimmung die Blattbreite ergibt. Daraus kann auch die bspw. zugehörige Position und Lage ermittelt werden.

Die Schritte 310 bis 380 können ferner die Berechnung der folgenden Parameter oder Merkmale umfassen:
Turmmittelpunkt, bspw. die exakte Turmposition
Nabenhöhe, bspw. Höhe der Drehachse
Neigung der Rotorblätter
Ausrichtung der Rotorblattflansche deren Mittelpunkt
Länge der Rotorblätter
Verformung und/oder Biegung der Rotorblätter
Stellung, bspw. Rotation der Rotorblätter
Neigungswinkel (Pitchwinkel) der Rotorblätter
Ausrichtung, der Windkraftanlage, bzw. der Nabe

Diese Parameter können der Korrektur einer Wegpunkt Berechnung dienen, bspw. der Wegpunktberechnung für einen Inspektionsflug einer Drohne.

Der weitere Schritt 390 umfasst das Generieren oder Modifizieren eines Modells oder Parametrisieren eines generischen Modells, z.B. eines CAD-Modells der Windkraftanlage. Das Modell wird mit den Positions- und/oder Lageinformationen der Merkmale generiert, modifiziert oder parametriert. Das Modell kann aus Kalibrierungsdaten, bspw. Daten aus den Schritten 310 bis 380, generiert, modifiziert oder parametriert werden. Darüber hinaus können noch weitere Parameter nach demselben Verfahren erhoben werden. Weitere Parameter können Parameter der Rotorblätter umfassen, wie beispielsweise die Rotorblattdicke und Rotorblattbreite. Das Generieren eines Modells ist bspw. nur notwendig, sofern kein Modell der gesamten Windkraftanlage, oder bspw. der Rotorblätter vorliegt. Anhand der ermittelten Parameter kann ein Modell, bspw. ein 3D Modell der Windkraftanlage, z.B. bestehend aus Turm und Rotorblättern, generiert werden und/oder dahingehend modifiziert werden, dass es z.B. möglichst genau, die Realität abbildet. Ferner kann ein generisches 3D Modell der Windkraftanlage parametriert werden, beispielsweise durch ein generisches Verfahren. Aus dem bspw. generischen Modell können dann Wegpunkte für einen autonomen Flug berechnet werden.

Gemäß Ausführungsbeispielen der vorliegenden Offenbarung können aus den Schritten 310 bis 380 die folgenden Größen bekannt oder abgeleitet sein:
Position der Rotorblattspitzen,
Position der Flanschmittelpunkte.
Lage, bzw. Orientierung der Flanschkreise im Raum, z.B. Normalen der Flanschkreise
Durchmesser des Flansches, und
Rotorblattbreite und Position des Rotorblattes.

Aus diesen Größen können weitere Größen abgeleitet werden. Sowohl die Rotorblattspitzen als auch die Flanschmittelpunkte können jeweils eine Ebene definieren, der ein Normalenvektor zugewiesen werden kann und es kann jeweils ein Mittelpunkt berechnet werden, z.B. als Kreismittelpunkt. Der Normalenvektor entspricht in beiden Fällen der Ausrichtung der Nabe, bzw. der Windkraftanlage bzw. der Richtung der Drehachse, also bspw. der gemeinsamen Drehachse der Rotorblätter. Daraus kann die Ausrichtung, bspw. das Heading und die Neigung der Drehachse nach oben berechnet werden. Der berechnete Mittelpunkt liegt auf der Drehachse und mit diesem kann deren Höhe, bspw. die Höhe der Nabe bestimmt werden. Aus dem Vergleich der Rotorblattspitzen bzw. Rotorblattflanschmittelpunkte mit deren Mittelpunkt lässt sich die Drehung der Windkraftanlage, also bspw. die Stellung der Rotorblätter (z.B. Abweichung von 6-Uhr Stellung) berechnen. Alternativ oder zusätzlich kann die Drehung auch aus den Normalenvektoren der Flanschkreise berechnet werden. Durch den Abstand der Rotorblattflanschmittelpunkte zueinander kann der Durchmesser der Nabe berechnet oder abgeschätzt werden. Die Abweichung der ermittelten Position der Rotorblattspitze von der erwarteten Position kann zur Ermittlung der Rotorblattbiegung, bspw. des Bendings verwendet werden. Mit der Berechnung der Flügelbreiten und Positionen kann bspw. ein generisches CAD Modell parametriert werden.

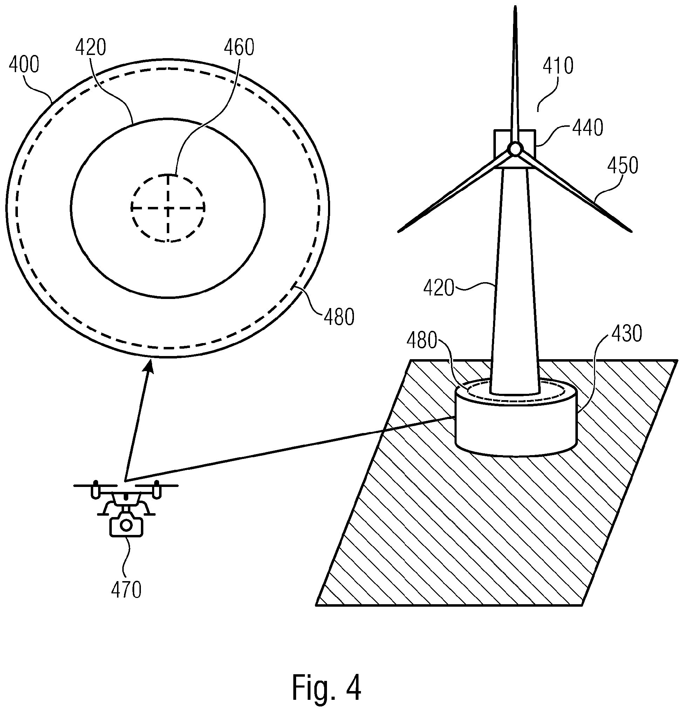

Fig. 4 zeigt eine schematische Seitenansicht einer Windkraftanlage mit einer schematischen Draufsicht eines Schnittes der Windkraftanlage und einer Bewegungstrajektorie der Aufnahmeeinheit gemäß einem Ausführungsbeispiel der vorliegenden Offenbarung. Fig. 4 zeigt beispielsweise den Schritt 310 aus Fig. 3. Fig 4. zeigt eine schematische Draufsicht 400 eines Schnittes einer Windkraftanlage, sowie eine schematische Seitenansicht 410 der Windkraftanlage. Die Windkraftanlage weist einen Turm, 420, ein Fundament 430, eine Gondel 440 sowie Rotorblätter 450 auf. Der Turmmittelpunkt 460 ist in der Draufsicht 400 markiert. Eine Bewegungstrajektorie 480 der Aufnahmeeinheit 470 auf der Fundamentoberkante ist ebenfalls gezeigt. Zur Bestimmung des Turmmittelpunkts 460 werden die Positionen der Aufnahmeeinheit 470 beim Umrunden des Turms 420 auf der Bewegungstrajektorie 480 aufgenommen. Anschließend werden Positionsteilmengen aus jeweils drei Punkten gebildet, wobei die drei Punkte einen vorbestimmten, z.B. möglichst gleichen Abstand zueinander aufweisen. Im Weiteren kann die Bestimmung einer Menge von Schwerpunkten von Dreiecken aus einer Mehrzahl der Positionsteilmengen erfolgen, wobei jedes Dreieck aus den drei Punkten einer Positionsteilmenge gebildet wird und der Turmmittelpunkt 460 aus dem Durchschnitt der Schwerpunkte berechnet wird. Alternativ oder zusätzlich kann eine Bestimmung einer Menge von Kreismittelpunkten aus einer Mehrzahl der Positionsteilmengen erfolgen, wobei jeder Kreismittelpunkt aus den drei Punkten einer Positionsteilmenge, mit Hilfe der allgemeinen Kreisgleichung, bestimmt wird. Dabei erfolgt die Berechnung des Turmmittelpunkts 460 aus der Menge der Kreismittelpunkte. Alternativ oder zusätzlich kann eine Bestimmung einer Menge von Umkreismittelpunkten aus einer Mehrzahl der Positionsteilmengen erfolgen, wobei jeder Umkreismittelpunkt der Mittelpunkt eines Umkreises eines Dreiecks ist, welches aus den drei Punkten einer Positionsteilmenge gebildet ist. Dabei erfolgt das Berechnen des Turmmittelpunkts 460 aus der Menge der Umkreismittelpunkte. Bei den Dreiecken kann es sich bspw. um gleichseitige oder gleichschenklige Dreiecke handeln.

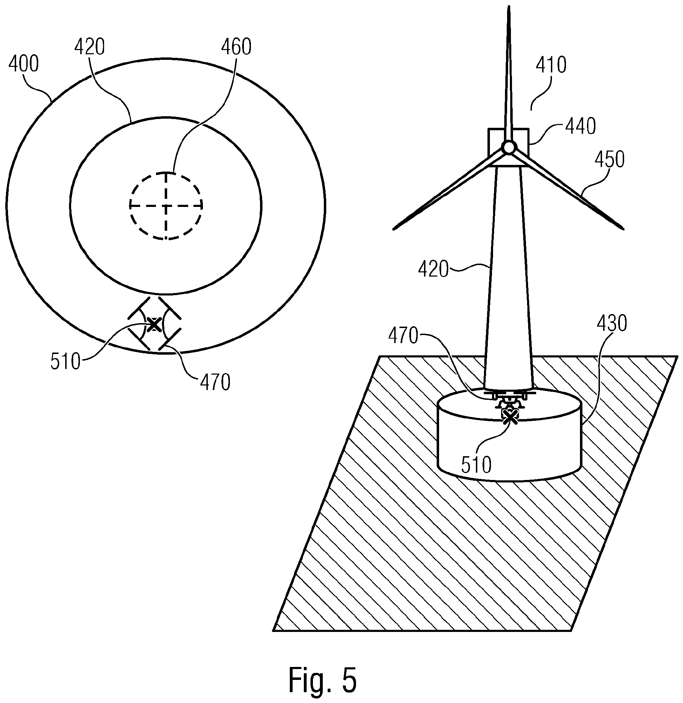

Fig. 5 zeigt eine schematische Seitenansicht einer Windkraftanlage mit einer schematische Draufsicht eines Schnittes der Windkraftanlage gemäß einem Ausführungsbeispiel der vorliegenden Offenbarung. Fig. 5 zeigt beispielsweise den Schritt 320 aus Fig. 3. Fig. 5 entspricht Fig. 4 mit Ausnahme der Position der Aufnahmeeinheit und dem Fehlen einer Bewegungstrajektorie. Fig. 5 zeigt im Vergleich zu Fig. 4 einen Referenzpunkt 510. Zur Bestimmung des Referenzpunktes, bspw. der Referenzhöhe oder der Höhe als Nullpunkt, der Windkraftanlage wird die Aufnahmeeinheit auf dem Referenzpunkt platziert. Anschließend erfolgt ein Auswerten der Positionsinformation der Aufnahmeeinheit. Damit kann bspw. für die Windkraftanlage eine Bezugshöhe bestimmt werden, anhand derer die Aufnahmeeinheit sich orientieren kann, z.B. um automatisiert zu den Rotorblattspitzen, oder zur Nabe zu fliegen. Bei dem Referenzpunkt kann es sich auch um eine eindimensionale Größe wie eine Referenzhöhe handeln. In diesem Fall kann der Referenzpunkt bspw. ein beliebiger Punkt mit gleicher Höhe relativ zum Turm, auf der Fundamentoberkante sein.

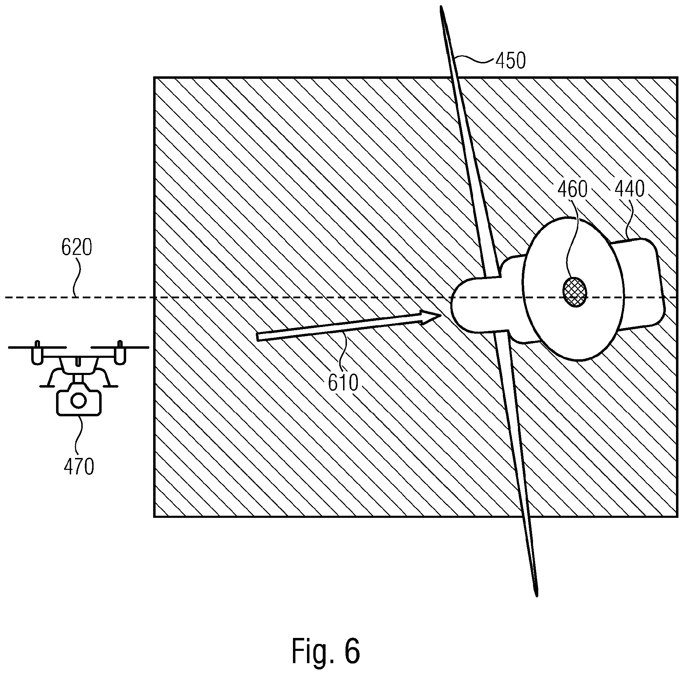

Fig. 6 zeigt, eine schematische Draufsicht einer Windkraftanlage gemäß einem Ausführungsbeispiel der vorliegenden Offenbarung. Fig. 6 zeigt bspw. Schritt 330 aus Fig. 3. Fig. 6 zeigt die bekannten Elemente aus Fig. 4 und Fig. 5, sowie eine Ausrichtung 610 der Windkraftanlage bezüglich des Turmmittelpunkts 460 und einer Referenzachse 620, bspw. eine nach Norden ausgerichtete Achse. Die Bestimmung der Ausrichtung der Windkraftanlage umfasst eine Auswertung des Turmmittelpunkts 460, und einer Positionsinformation der Aufnahmeeinheit 470, wobei die Aufnahmeeinheit zum Zeitpunkt der Aufnahme der Positionsinformation entsprechend der Ausrichtung 610 der Windkraftanlage positioniert ist. Damit kann in kurzer Zeit und ohne weitere Messgeräte mit Ausnahme der Aufnahmeeinheit 470 eine Ausrichtung 610 der Windkraftanlage bestimmt werden. Aus dem Turmmittelpunkt 460 und der Position der Aufnahmeeinheit kann eine Gerade, bzw. der Richtungsvektor einer Verbindungsgeraden der beiden Punkte bestimmt werden. Der Winkel dieses Richtungsvektors, bzw. der Geraden zu der Referenzachse 620 kann zur Auswertung der Ausrichtung 610 genutzt werden.

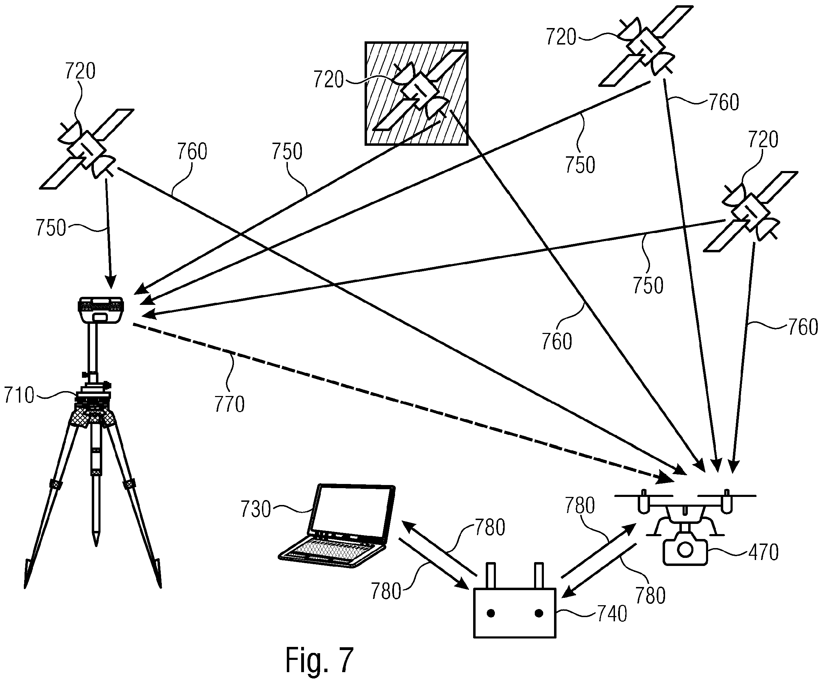

Fig. 7 zeigt eine schematische Darstellung eines beispielhaften Informationsflusses zwischen einem Echtzeit Kinematik System, Aufnahmeeinheit, Auswerteeinrichtung und Kommunikationseinheit, bspw. einer Remote Console gemäß einem Ausführungsbeispiel der vorliegenden Offenbarung. Fig. 7 zeigt die Aufnahmeeinheit 470, ein Echtzeit Kinematik System 710, bspw. RTK, Satelliten 720, eine Auswerteeinheit 730 und eine Kommunikationseinheit 740. Das Echtzeit Kinematik System bezieht bspw. Informationen über die eigene Position von den Satelliten 720, der Informationsfluss ist mit den Pfeilen 750 angedeutet. Die Aufnahmeeinheit 470 kann ebenfalls Informationen über die eigene Position über die Satelliten 720 beziehen, der Informationsfluss ist mit den Pfeilen 760 angedeutet. Das Echtzeit Kinematik System kann dazu genutzt werden die Positionsdaten der Aufnahmeeinheit zu verbessern, angedeutet durch Pfeil 770. Die Kommunikation der Aufnahmeeinheit 470 mit der Auswerteeinheit 730 erfolgt dabei über die Kommunikationseinheit 740, angedeutet durch die Pfeile 780. Die Kommunikation kann dabei, bspw. zwischen Aufnahmeeinheit und Kommunikationseinheit verschlüsselt erfolgen. Die Aufnahmeeinheit kann dabei ferner eine Steuereinheit umfassen. Dadurch kann eine mobile und kostengünstige Möglichkeit geschaffen werden präzise Positions- und Lageinformationen der Windkraftanlage zu generieren, ohne teure, aufwändige, und z.B. schwere GPS-Module in die Aufnahmeeinheit 470 zu integrieren, um ausreichend präzise Positionsdaten zu generieren.

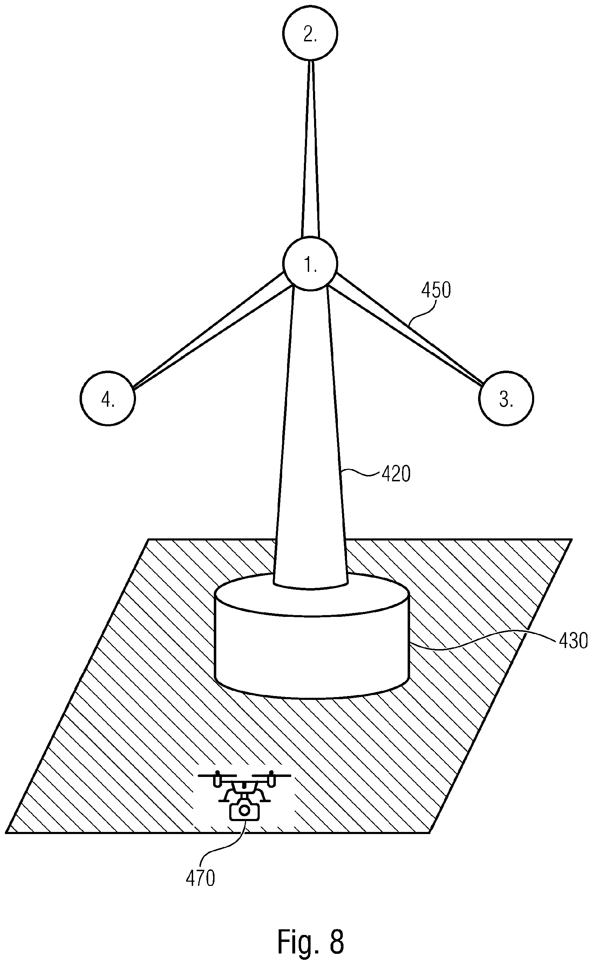

Fig. 8 zeigt eine schematische Seitenansicht einer Windkraftanlage mit einer beispielhaften Reihenfolge der Erfassung der Aufnahmeeinheit gemäß einem Ausführungsbeispiel der vorliegenden Offenbarung. Fig. 8 zeigt die bekannten Elemente aus Fig. 4 und Fig. 5. Zusätzlich ist mit den Zahlen 1 bis 4 eine mögliche Abfolge des Abfliegens durch die Aufnahmeeinheit gezeigt. Nach der Bestimmung der Referenzposition, des Referenzpunktes und der Ausrichtung der Windkraftanlage, kann bspw. automatisiert oder autonom zuerst die Nabe (1.) zur Bestimmung der Turmhöhe und anschließend die Rotorblattspitzen angeflogen werden. Auf dem Weg zu den Rotorblattspitzen können dabei bspw. weitere Abschnitte z.B. optisch erfasst werden. Die Stellung der Rotorblätter ist dabei als beispielhaft hervorzuheben, eine Ausrichtung auf die 6 Uhr Position oder beliebige andere Positionen ist möglich.

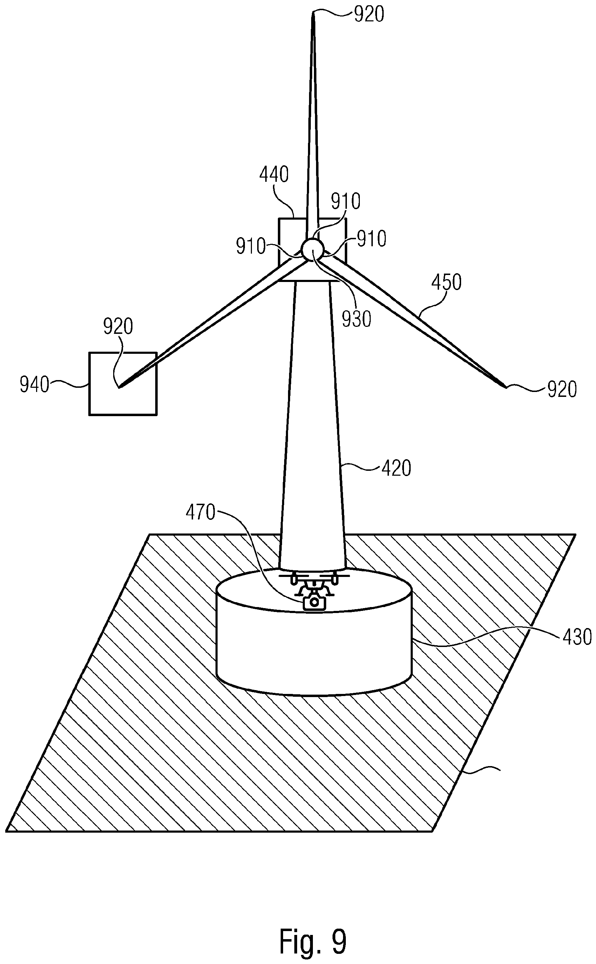

Fig. 9 zeigt eine schematische Seitenansicht einer Windkraftanlage mit beispielhaften Merkmalen gemäß einem Ausführungsbeispiel der vorliegenden Offenbarung. Fig. 9 zeigt die bekannten Elemente aus Fig. 4 und Fig. 5. Merkmale, deren Position und/oder Lage mit dem offenbarungsgemäßen Verfahren bestimmt werden können, sind beispielhaft in Form der Rotorblattflansche 910, der Rotorblattspitzen 920 und der Nabe 930 gekennzeichnet. Exemplarisch ist ein Abschnitt 940 der Windkraftanlage, welche durch die Aufnahmeeinheit erfasst werden kann, gezeigt. Eine Vielzahl weiterer oder anderer Merkmale ist ebenfalls denkbar. Bspw. können auch einzelne Punkte des Rotorblattflansches Merkmale bilden. Durch das Abfotografieren eines Abschnitts 940 der Windkraftanlage, kann bspw. ein Erkennen des Merkmals Rotorblattspitze 920 erfolgen, sowie die offenbarungsgemäße Auswertung von Lage und/oder Position der Rotorblattspitze.

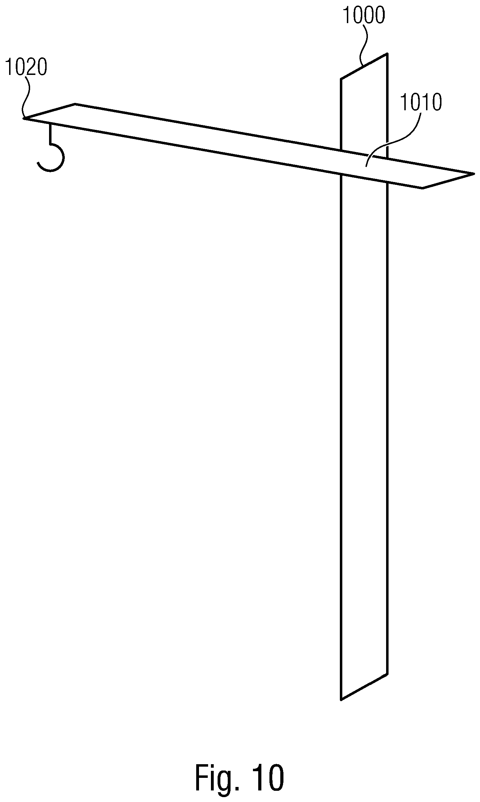

Fig. 10 zeigt eine schematische Seitenansicht eines Beispiels für das Objekt in Form eines Krans, gemäß einem Ausführungsbeispiel der vorliegenden Offenbarung. Fig. 10 zeigt einen Kran 1000. Beispielhafte Merkmale des Krans sind mit der Verbindung 1010 zwischen Turm und Ausleger und der Spitze 1020 des Auslegers gekennzeichnet. Durch das offenbarungsgemäße Verfahren kann durch das Aufnehmen mehrerer Abschnitte des Krans 1000 eine Erkennung von Lagen und/oder Positionen der Merkmale durchgeführt werden. Damit kann zum Beispiel auf Dauerbaustellen die Integrität eines Krans 1000 schnell und kostengünstig geprüft werden. Da die Ausrichtung je nach voriger Lastenbewegung des Krans variieren kann, kann offenbarungsgemäß eine Datenerfassung ohne zusätzliches, zeitaufwändiges Ausrichten des Krans 1000 erfolgen. Durch die Auswertung der Positionen und/oder Lagen der Merkmale kann ein Modell des Krans 1000 generiert werden, um damit autonome Inspektionsflüge durchzuführen.

Alle hierin aufgeführten Aufzählungen der Materialien, Umwelteinflüsse, elektrischen Eigenschaften und optischen Eigenschaften sind hierbei als beispielhaft und nicht als abschließend anzusehen.

### Schlussfolgerungen und weitere Anmerkungen

Ganz allgemein beruhen Ausführungsbeispiele gemäß der vorliegenden Offenbarung auf der Idee auf, bspw. aus einer optischen Erfassung stammenden, erstellten Bildern signifikante Punkte zu markieren. Bei den signifikanten Punkten kann es sich um Randpunkte handeln. Anhand bekannter Positionen und Lagen, bspw. Ausrichtungen der Bilder, sowie der Parameter der Aufnahmeeinheit, bspw. der Kamera der Aufnahmeeinheit kann ein Strahl bzw. eine Gerade entlang der Bildtiefe projiziert werden. Durch Auswerten mehrerer Bilder kann bspw. ein exakter Punkt im Raum bestimmt werden. Mit diesen Punkten kann anschließend ein zu bestimmendes Maß oder ein zu bestimmender Parameter eines Objekts, bspw. der Windkraftanlage ermittelt werden.

Ausführungsbeispiele gemäß der vorliegenden Offenbarung beziehen sich auf ein Verfahren zur Erzeugung von Kalibrierungsdaten zur automatischen Positionsbestimmung oder Wegpunkt Bestimmung für autonome Flüge einer Aufnahmeeinheit, bspw. einer Drohne (UAV) zur Vorbereitung auf ein Verfahren zum Bestimmen eines Pfades entlang eines Objekts und System.

Ausführungsbeispiele gemäß der vorliegenden Offenbarung beziehen sich auf die Inspektion einer Windkraftanlage mit einer Aufnahmeeinheit, bspw. einer handelsüblichen Drohne (UAV), die mit Kamera und/oder Blitzschutzmessung ausgerüstet sein kann. Die Drohne kann ferner weitere Sensoren oder Module umfassen. Beispielsweise können Sensoren auf Grundlage von Radar, Ultraschall, Infrarot, Laser oder weiteren Technologien ausgerüstet sein. Die Aufnahmeeinheit kann dabei automatisch eine Strecke entlang einer Windkraftanlage abfliegen, um Fotos oder Messungen von dem Objekt zu machen und mögliche Schäden zu detektieren.

Ganz allgemein liegt Ausführungsbeispielen gemäß der vorliegenden Offenbarung die Idee zu Grunde, die Vermessung einer Windkraftanlage mit einer Aufnahmeeinheit, bspw. einer handelsüblichen Drohne zu automatisieren und einen Kalibrierungsdatensatzes zum autonomen Abfliegen der Windkraftanlage zu erzeugen. Dabei können automatisch Aufnahmen von der Rotornabe, der Stellung der Rotorblätter, sowie deren Blattspitzen gemacht werden. An Hand der Auswertung der Aufnahmen kann automatisch ein Flugweg (Pfad) der Aufnahmeeinheit entlang der Windkraftanlage errechnet werden.

Objekte gemäß Ausführungsbeispielen der vorliegenden Offenbarung können bspw. Windkraftanlagen, Kräne, Brücken, oder Brückenpfeiler, Staudämme oder Strommasten umfassten. Diese Liste ist dabei nicht als abschließend anzusehen. Das offenbarungsgemäße Verfahren ist z.B. insbesondere sehr vorteilhaft auf schwer zugängliche, große Objekte anwendbar, die überprüft werden müssen, oder von denen ein Modell erstellt werden soll.

Ausführungsbeispiele gemäß der vorliegenden Offenbarung umfassen einen automatischen Kalibrierungsflug für eine Windkraftanlage nach einer Bodenkalibrierung, bspw. umfassend eine Bestimmung des Turmzentrums, der Turmhöhe und der Ausrichtung der Windkraftanlage, z.B. des Turmazimuts, mit bekannten Werten für die Nabenhöhe und Länge der Rotorblätter, sodass eine ausreichende Windradposition für den automatischen Kalibrierungsflug mit genügend Sicherheitsabstand, aber bspw. mit weniger als 20 m Abstand, angenommen werden kann. Ferner kann mit diesem Flug eine Bestimmung genauer Messwerte für die Position der Rotorblattspitzen, sowie der Rotorblattflansche und bspw. weitere Merkmale oder Parameter ermöglicht werden.

Ausführungsbeispiele gemäß der vorliegenden Offenbarung beruhen auf der Verwendung geometrischer Hilfskonstruktionen zur Bestimmung von Positionen und/oder Lagen von Merkmalen oder Parametern. Geometrische Hilfskonstruktionen können dabei Strahlen oder Geraden umfassen. Je nach konkretem Merkmal oder Parameter kann eine entsprechende Form der geometrischen Hilfskonstruktion, also beispielsweise eine Gerade oder ein Strahl, oder auch nur ein Richtungsvektor einer Gerade oder ein Richtungsvektor eines Strahls, Verwendung finden. Offenbarungsgemäße Verfahren und Systeme sind nicht auf die konkrete Verwendung einer bestimmten Darstellungsform der Information, die bspw. durch eine Gerade oder einen Strahl abgebildet werden kann, beschränkt. Bei der Verwendung eines Strahls, der von einem ersten Punkt ausgeht und einen zweiten Punkt umfasst, ist bspw. durch die Kenntnis der beiden Punkte eine entsprechende, zugehörige Gerade bekannt, die ebenfalls beide Punkte umfasst und den gleichen Informationsgehalt aufweist. Umgekehrt bietet eine Gerade eine Richtungsinformation für einen Strahl, der sich als Teilstrecke der Gerade ausbilden kann. Diese Darstellungsformen sollen lediglich beispielhaften Charakter aufweisen und können daher, mit gleichem Informationsgehalt, im Kontext einer bestimmten Aufgabe, als beliebig austauschbar behandelt werden.

Ganz allgemein können Ausführungsbeispiele gemäß der vorliegenden Offenbarung eine Bestimmung oder Berechnung der Positionen der Rotorblattspitzen, bspw. Tipspitzen, einer Windkraftanlage umfassen. Zur Bestimmung der Positionen kann bspw. eine Menge von Geraden oder Strahlen zwischen der in einem Bild identifizierten Position einer Rotorblattspitze und der zugehörigen Position der Aufnahmeeinheit im dreidimensionalen Raum aufgestellt werden. Dementsprechend kann zur Bestimmung der Position der Rotorblattspitze ein "Schnittpunkt" der Menge von Geraden oder Strahlen im dreidimensionalen Raum gesucht werden. In einfachen Worten kann die Ausgangslage gemäß solcher Ausführungsbeispielen eine Anzahl von Strahlen in 3D sein, deren "Schnittpunkt" gesucht wird. In der Realität, bspw. beim praktischen Einsatz an Windkraftanlagen, mit Daten von echten Aufnahmeeinheiten, können einige oder bspw. alle Geraden oder Strahlen windschief sein und sich in keinem Punkt schneiden. Gemäß derartiger Ausführungsbeispiele kann stattdessen ein Punkt P, der einem "Schnittpunkt" am nächsten kommt, bestimmt werden.

Dazu können zwei Definition verwendet werden und bspw. die entsprechenden Verarbeitungsschritte durchgeführt werden:
"Minimaler Abstand": Der minimale Abstand eines 3D Punktes zu einem Strahl oder bspw. einer Geraden, ist die Länge der Lotstrecke zwischen Punkt und Strahl oder bspw. Punkt und Gerade.

"Summe der Quadrate der minimalen Abstände": Für die gegebenen Strahlen werden jeweils die minimalen Abstände zu einem Punkt berechnet und quadriert. Dann wird die Summe über diese quadrierten Abstände gebildet.

Der gesuchte Punkte ist dann genau derjenige Punkt der die Summe der Quadrate der minimalen Abstände minimiert.

Beispielsweise mit Hilfe eines Optimierungsalgorithmus, z.B. mit dem "Limited-memory Broyden-Fletscher-Goldfarb-Shanno" Algorithmus (L-BFGS) kann der Punkt P bestimmt werden.

Beispielsweise kann der Punkt P wiederum als Ergebnis für die Position der Rotorblattspitze verwendet werden.

Obwohl manche Aspekte im Zusammenhang mit einer Vorrichtung oder einem System beschrieben wurden, versteht es sich, dass diese Aspekte auch eine Beschreibung des entsprechenden Verfahrens darstellen, sodass ein Block oder ein Bauelement einer Vorrichtung oder eines Systems auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung oder eines Systems dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren auf-gezeichnet ist. Der Datenträger, das digitale Speichermedium oder das computerlesbare Medium sind typischerweise gegenständlich und/oder nichtvergänglich bzw. nicht-vorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen oder Systeme können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen oder Systeme, oder jedwede Komponenten der hierin beschriebenen Vorrichtungen oder Systeme können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zur Erfassung eines Objekts (1000), das durch eine Mehrzahl von vorbestimmten Merkmalen (910, 920, 930, 1010, 1020) beschreibbar ist, wobei das Verfahren die folgenden Schritte umfasst:
(a) Abfliegen des Objekts (1000) und Erfassen mehrerer Abschnitte (940) des Objekts mit zumindest einer Aufnahmeeinheit (470), wobei jeder der Abschnitte mehrfach aus unterschiedlichen Positionen der Aufnahmeeinheit erfasst wird, um einen Satz von Bildern zu erzeugen, wobei jedem Bild eine Positions- und Lageinformation der Aufnahmeeinheit zugeordnet ist; und
(b) Erkennen von Merkmalen (910, 920, 930, 1010, 1020) in den Bildsätzen; und
(c) Bestimmen der Positionen und/oder Lagen der Merkmale (910, 920, 930, 1010, 1020) unter Verwendung der Positions- und Lageinformationen der Bilder, die die Merkmale enthalten;
wobei es sich bei der Aufnahmeeinheit (470) um eine Drohne oder eine Messeinrichtung im Verbund mit einer Drohne handelt, die dazu ausgelegt ist,
die Sätze von Bildern zu erzeugen; und
jedem Bild die Positions- und Lageinformation der Aufnahmeeinheit zum Zeitpunkt der Aufnahme des jeweiligen Bildes zuzuordnen.

2. Verfahren nach Anspruch 1, wobei der Schritt (c), ferner umfasst:
Aufstellen einer Mehrzahl geometrischer Hilfskonstruktionen, wobei die geometrischen Hilfskonstruktionen für jedes Bild, welches ein Merkmal (910, 920, 930, 1010, 1020) enthält, zwischen
der Position der Aufnahmeeinheit (470), die dem Bild zugeordnet ist, und der Position eines in dem Bild identifizierten Merkmals (910, 920, 930, 1010, 1020) oder
den Positionen mehrerer in einem Bild identifizierten Merkmale (910, 920, 930, 1010, 1020),
in einem Koordinatensystem aufgestellt werden; und
Auswerten der geometrischen Hilfskonstruktionen, um eine Menge von Ergebnissen für die Position und/oder Lage des Merkmals (910, 920, 930, 1010, 1020) oder eines aus mehreren Merkmalen abgeleiteten Merkmals zu erhalten; und
statistisches Auswerten der Menge von Ergebnissen.

3. Verfahren nach einem der vorigen Ansprüche, wobei das Verfahren ferner umfasst:
Bestimmen einer Ausrichtung des Objektes (1000) durch eine Auswertung einer Referenzposition (460) des Objektes und einer Positionsinformation der Aufnahmeeinheit (470), wobei die Aufnahmeeinheit zum Zeitpunkt der Aufnahme der Positionsinformation entsprechend der Ausrichtung (610) des Objektes positioniert ist;

4. Verfahren nach Anspruch 3, wobei das Verfahren ferner umfasst:
Bestimmen der Referenzposition (460) des Objekts (1000) durch Auswerten einer Menge von Positionsinformationen der Aufnahmeeinheit (470), wobei die Menge von Positionsinformationen aus einer Bewegungstrajektorie (480) der Aufnahmeeinheit stammt.

5. Verfahren nach einem der vorigen Ansprüche, wobei das Verfahren ferner umfasst:
Bestimmen von zumindest einer Abmessung des Objekts (1000) durch die Auswertung eines Referenzpunktes (510) des Objektes, und der Position eines oder mehrerer der Merkmale (910, 920, 930, 1010, 1020).

6. Verfahren nach einem der vorigen Ansprüche, wobei die Positionen der Aufnahmeeinheit (470) und der Merkmale (910, 920, 930, 1010, 1020) Koordinaten eines vorbestimmten Koordinatensystems umfassen; und
wobei das Verfahren ferner ein Einsetzen eines Echtzeit Kinematik, RTK, Systems (710) zur Korrektur der Positions- und Lageinformation der Aufnahmeeinheit umfasst.

7. Verfahren nach einem der vorigen Ansprüche, wobei der Schritt (b) ein automatisiertes Erkennen der Merkmale (910, 920, 930, 1010, 1020) in den Bildsätzen umfasst und/oder der Schritt (c) ein automatisiertes Bestimmen der Positionen und/oder Lagen der Merkmale umfasst.

8. Verfahren nach einem der vorigen Ansprüche, wobei es sich bei dem Objekt (1000) um eine Windkraftanlage handelt, wobei die Windkraftanlage einen Turm (420), eine Gondel (440), eine Nabe (930), Rotorblattflansche (910), sowie Rotorblätter (450) und eine gemeinsame Drehachse der Rotorblätter aufweist; und
wobei das Verfahren ferner die Bestimmung eines oder mehrerer Parameter der Windkraftanlage auf Grundlage der Positionen und/oder Lagen der Merkmale (910, 920, 930, 1010, 1020) umfasst.

9. Verfahren nach Anspruch 8, wobei der Parameter eine Position einer Rotorblattspitze (920) umfasst, die z.B. wie folgt bestimmt wird:
Bestimmen einer Gerade zwischen der in einem Bild identifizierten Position der Rotorblattspitze (920) und der zugehörigen Position der Aufnahmeeinheit (470), wobei zur Bestimmung der Gerade neben der Position der Aufnahmeeinheit zum Zeitpunkt der Aufnahme des Bildes und der identifizierten Position der Rotorblattspitze ferner auch die Lage der Aufnahmeeinheit zum Zeitpunkt der Aufnahme des Bildes sowie Eigenschaften der Aufnahmeeinheit (470)mitberücksichtigt werden;
Bestimmen einer Mehrzahl von Geraden für einen Satz von Bildern der Rotorblattspitze (920);
paarweises Auswerten der Mehrzahl von Geraden;
Berechnen eines Schnittpunkts für jedes Geradenpaar; und
Berechnen der Position der Rotorblattspitze (920) aus einer Menge der Schnittpunkte der Geradenpaare.

10. Verfahren nach einem der Ansprüche 8 bis 9, wobei der Parameter eine Position eines Rotorblattflansches (910) umfasst, die z.B. wie folgt bestimmt wird:
Bestimmen einer ersten Gerade zwischen der Position eines ersten, in einem Bild identifizierten Punktes des Rotorblattflansches (910) und der Position der Aufnahmeeinheit (470) und einer zweiten Gerade zwischen der Position eines zweiten, dem ersten Punkt gegenüberliegenden, in demselben Bild identifizierten Punktes des Rotorblattflansches und der Position der Aufnahmeeinheit, wobei zur Bestimmung der ersten und zweiten Geraden neben der Position der Aufnahmeeinheit zum Zeitpunkt der Aufnahme des Bildes und den identifizierten Positionen der Punkte der Rotorblattflansche ferner auch die Lage der Aufnahmeeinheit zum Zeitpunkt der Aufnahme des Bildes sowie Eigenschaften der Aufnahmeeinheit (470)mitberücksichtigt werden;
Bestimmen einer weiteren Gerade, die in der Mitte zwischen der ersten und zweiten Gerade verläuft;
Bestimmen einer Mehrzahl weiterer Geraden für einen Satz von Bildern des Rotorblattflansches (910); und
Bestimmen der Position des Rotorblattflansches (910) aus der Mehrzahl der weiteren Geraden.

11. Verfahren nach einem der Ansprüche 8 bis 10 wobei der Parameter eine Lage eines Rotorblattflansches (910) umfasst, die z.B. wie folgt bestimmt wird:
Identifizieren zweier gegenüberliegender Punkte des Rotorblattflansches (910) in einem Bild;
Bestimmen eines Richtungsvektors einer Verbindungsgeraden zwischen den Positionen der beiden gegenüberliegenden Punkte des Rotorblattflansches (910);
Bestimmen einer Mehrzahl von Richtungsvektoren von Verbindungsgeraden für einen Satz von Bildern des Rotorblattflansches (910);
Berechnen einer Menge von möglichen Normalenvektoren des Rotorblattflansches (910) aus der Mehrzahl der Richtungsvektoren der Verbindungsgeraden durch paarweise Bildung des Kreuzproduktes der Richtungsvektoren der Verbindungsgeraden; und
Berechnen eines Normalenvektors des Rotorblattflansches (910) aus der Menge der möglichen Normalenvektoren.

12. Verfahren nach einem der Ansprüche 8 bis 11, wobei der Parameter den Turmmittelpunkt (460) umfasst, der z.B. wie folgt bestimmt wird:
zumindest teilweises Umrunden des Turms (420) entlang der äußeren Wand des Turms mit der Aufnahmeeinheit (470);
Aufzeichnen der Positionen der Aufnahmeeinheit (470) beim Umrunden des Turms (420);
Bilden von Positionsteilmengen aus jeweils drei Punkten, wobei die drei Punkte einen vorbestimmten Abstand zueinander aufweisen;
Bestimmen einer Menge von Schwerpunkten von Dreiecken aus einer Mehrzahl der Positionsteilmengen, wobei jedes Dreieck aus den drei Punkten einer Positionsteilmenge gebildet wird; und
Berechnen des Mittelpunkts (460) des Turms aus dem Durchschnitt der Schwerpunkte; oder
Bestimmen einer Menge von Kreismittelpunkten aus einer Mehrzahl der Positionsteilmengen, wobei jeder Kreismittelpunkt aus den drei Punkten einer Positionsteilmenge, mit Hilfe der allgemeinen Kreisgleichung, bestimmt wird; und
Berechnen des Mittelpunkts (460) des Turms aus der Menge der Kreismittelpunkte; oder
Bestimmen einer Menge von Umkreismittelpunkten aus einer Mehrzahl der Positionsteilmengen, wobei jeder Umkreismittelpunkt der Mittelpunkt eines Umkreises eines Dreiecks ist, welches aus den drei Punkten einer Positionsteilmenge gebildet ist; und
Berechnen des Mittelpunkts (460) des Turms aus der Menge der Umkreismittelpunkte

13. Verfahren nach einem der vorigen Ansprüche, wobei das Verfahren ferner umfasst:
Generieren oder Modifizieren eines Modells oder Parametrisieren eines generischen Modells, z.B. eines CAD-Modells, des Objekts (1000) mit den Positions- und/oder Lageinformationen der Merkmale (910, 920, 930, 1010, 1020).

14. Verfahren zur Inspektion eines Objekts (1000), mit folgenden Schritten:
Abfliegen des Objekts entlang eines Pfades, und
Erfassen eines oder mehrerer Abschnitte (940) des Objekts (1000) während des Abfliegens,
wobei der Pfad auf einer Darstellung des Objekts durch die Merkmale (910, 920, 930, 1010, 1020) oder Parameter basiert, die durch das Verfahren nach einem der vorherigen Ansprüche erhalten werden.

15. System zur Erfassung eines Objekts (1000), das durch eine Mehrzahl von vorbestimmten Merkmalen (910, 920, 930, 1010, 1020) beschreibbar ist, wobei das System die folgenden Merkmale umfasst:
eine Messeinrichtung, die alleine oder im Verbund mit einer Drohne eine Aufnahmeeinheit (470) bildet, wobei die Messeinrichtung ausgelegt ist,
das Objekt abzufliegen,
mehrere Abschnitte des Objekts (1000) aus unterschiedlichen Positionen zu erfassen, um einen Satz von Bildern zu erzeugen, wobei jedem Bild eine Positions- und Lageinformation der Messeinrichtung zugeordnet ist; und
eine Auswerteeinrichtung (730), die dazu ausgelegt ist, Merkmale in den Bildsätzen zu erkennen und Positionen und/oder Lagen der Merkmale (910, 920, 930, 1010, 1020) unter Verwendung der Positions- und Lageinformationen der Bilder, die die Merkmale enthalten, zu bestimmen;
wobei die Aufnahmeeinheit (470) dazu ausgelegt ist,
um die Sätze von Bildern zu erzeugen; und
um jedem Bild die Positions- und Lageinformation der Aufnahmeeinheit zum Zeitpunkt der Aufnahme des jeweiligen Bildes zuzuordnen.

## Claims

1. Method for detecting an object (1000) which can be described by a plurality of predetermined features (910, 920, 930, 1010, 1020), the method including:
(a) flying along the object (1000) and detecting a plurality of sections (940) of the object with at least one recording unit (470), wherein each of the sections is detected a plurality of times from different positions of the recording unit in order to generate a set of images, wherein position and location information of the recording unit is associated with each image; and
(b) detecting features (910, 920, 930, 1010, 1020) in the sets of images; and
(c) determining the positions and/or locations of the features (910, 920, 930, 1010, 1020) using the position and location information of the images containing the features;
wherein the recording unit (470) is a drone or a measuring device in conjunction with a drone, configured to
generate the sets of images; and
associate the position and location information of the recording unit with each image at the time of recording the respective image.

2. Method according to claim 1, wherein step (c) further includes:
establishing a plurality of geometrical auxiliary constructions, wherein the geometrical auxiliary constructions for each image containing a feature (910, 920, 930, 1010, 1020) are established between
the position of the recording unit (470) associated with the image and the position of a feature (910, 920, 930, 1010, 1020) identified in the image or
the positions of a plurality of features (910, 920, 930, 1010, 1020) identified in an image,
in a coordinate system; and
evaluating the geometrical auxiliary constructions to obtain a set of results for the position and/or location of the feature (910, 920, 930, 1010, 1020) or a feature derived from a plurality of features; and
statistically evaluating the set of results.

3. Method according to one of the preceding claims, the method further including:
determining an orientation of the object (1000) by evaluating a reference position (460) of the object and position information of the recording unit (470), wherein the recording unit is positioned according to the orientation (610) of the object at the time of recording the position information;

4. Method according to claim 3, the method further including:
determining the reference position (460) of the object (1000) by evaluating a set of position information of the recording unit (470), wherein the set of position information originates from a movement trajectory (480) of the recording unit.

5. Method according to one of the preceding claims, the method further including:
determining at least one dimension of the object (1000) by evaluating a reference point (510) of the object, and the position of one or more of the features (910, 920, 930, 1010, 1020).

6. Method according to one of the preceding claims, wherein the positions of the recording unit (470) and of the features (910, 920, 930, 1010, 1020) include coordinates of a predetermined coordinate system; and
wherein the method further includes employing a real time kinematics, RTK, system (710) for correcting the position and location information of the recording unit.

7. Method according to one of the preceding claims, wherein step (b) includes automated detection of the features (910, 920, 930, 1010, 1020) in the sets of images and/or step (c) includes automated determination of the positions and/or locations of the features.

8. Method according to one of the preceding claims, wherein the object (1000) is a wind turbine, the wind turbine having a tower (420), a nacelle (440), a hub (930), rotor blade flanges (910), and rotor blades (450), and a common axis of rotation of the rotor blades; and
wherein the method further includes determining one or more parameters of the wind turbine based on the positions and/or locations of the features (910, 920, 930, 1010, 1020).

9. Method according to claim 8, wherein the parameter includes a position of a rotor blade tip (920) which is determined e.g. as follows:
determining a straight line between the position of the rotor blade tip (920) identified in an image and the associated position of the recording unit (470), wherein, in addition to the position of the recording unit at the time of recording the image and the identified position of the rotor blade tip, the location of the recording unit at the time of recording the image as well as properties of the recording unit (470) are also taken into account for determining the straight line;
determining a plurality of straight lines for a set of images of the rotor blade tip (920);
evaluating the plurality of straight lines in pairs;
calculating an intersection point for each pair of straight lines; and
calculating the position of the rotor blade tip (920) from a set of the intersection points of the pairs of straight lines.

10. Method according to one of claims 8 to 9, wherein the parameter includes a position of a rotor blade flange (910) which is determined e.g. as follows:
determining a first straight line between the position of a first point of the rotor blade flange (910) identified in an image and the position of the recording unit (470) and a second straight line between the position of a second point of the rotor blade flange opposite the first point identified in the same image and the position of the recording unit, wherein, in addition to the position of the recording unit at the time of recording the image and the identified positions of the points of the rotor blade flanges, the location of the recording unit at the time of recording the image as well as properties of the recording unit (470) are also taken into account for determining the first and second straight lines;
determining a further straight line running in the middle between the first and second straight lines;
determining a plurality of further straight lines for a set of images of the rotor blade flange (910); and
determining the position of the rotor blade flange (910) from the plurality of further straight lines.

11. Method according to one of claims 8 to 10, wherein the parameter includes a location of a rotor blade flange (910) which is determined e.g. as follows:
identifying two opposite points of the rotor blade flange (910) in an image;
determining a direction vector of a connecting straight line between the positions of the two opposite points of the rotor blade flange (910);
determining a plurality of direction vectors of connecting straight lines for a set of images of the rotor blade flange (910);
calculating a set of possible normal vectors of the rotor blade flange (910) from the plurality of direction vectors of the connecting straight lines by forming the cross product of the direction vectors of the connecting straight lines in pairs; and
calculating a normal vector of the rotor blade flange (910) from the set of possible normal vectors.

12. Method according to one of claims 8 to 11, wherein the parameter includes the tower center (460) which is determined e.g. as follows:
at least partially encircling the tower (420) along the outer wall of the tower with the recording unit (470);
recording the positions of the recording unit (470) when encircling the tower (420);
forming position subsets from three points each, the three points being at a predetermined distance from one another;
determining a set of centroids of triangles from a plurality of the position subsets, wherein each triangle is formed from the three points of a position subset; and
calculating the center (460) of the tower from the average of the centroids; or
determining a set of circle centers from a plurality of the position subsets, wherein each circle center is determined from the three points of a position subset using the general circle equation; and
calculating the center (460) of the tower from the set of circle centers; or
determining a set of circle centers from a plurality of the position subsets, wherein each circle center is the center of a circle of a triangle formed from the three points of a position subset; and
calculating the center (460) of the tower from the set of circle centers,

13. Method according to one of the preceding claims, the method further including:
generating or modifying a model or parameterizing a generic model, e.g. a CAD model, of the object (1000) with the position and/or location information of the features (910, 920, 930, 1010, 1020).

14. Method for inspecting an object (1000), including:
flying along the object along a path, and
detecting one or more sections (940) of the object (1000) during the flight,
wherein the path is based on a representation of the object by the features (910, 920, 930, 1010, 1020) or parameters obtained by the method according to one of the preceding claims.

15. System for detecting an object (1000) which can be described by a plurality of predetermined features (910, 920, 930, 1010, 1020), the system including:
a measuring device forming a recording unit (470) alone or in conjunction with a drone, the measuring device being configured to
fly along the object,
detect a plurality of sections of the object (1000) from different positions in order to generate a set of images, wherein position and location information of the measuring device is associated with each image; and
an evaluation device (730) configured to detect features in the sets of images and to determine positions and/or locations of the features (910, 920, 930, 1010, 1020) using the position and location information of the images containing the features;
wherein the recording unit (470) is configured to
generate the sets of images; and
associate the position and location information of the recording unit with each image at the time of recording the respective image.

## Revendications

1. Procédé de capture d'un objet (1000) qui peut être décrit par une pluralité de caractéristiques prédéterminées (910, 920, 930, 1010, 1020), dans lequel le procédé comprend les étapes suivantes consistant à:
(a) survoler l'objet (1000) et capturer plusieurs segments (940) de l'objet par au moins une unité de capture (470), où chacun des segments est capturé plusieurs fois à partir de différentes positions de l'unité de capture pour générer un ensemble d'images, où à chaque image est associée une information de position et de localisation de l'unité de capture; et
(b) reconnaître les caractéristiques (910, 920, 930, 1010, 1020) dans les ensembles d'images; et
(c) déterminer les positions et/ou localisations des caractéristiques (910, 920, 930, 1010, 1020) à l'aide des informations de position et de localisation des images qui contiennent les caractéristiques;
dans lequel il s'agit, pour l'unité de capture (470), d'un drone ou d'un moyen de mesure en association avec un drone, qui est conçu pour:
générer les ensembles d'images; et
associer à chaque image l'information de position et de localisation de l'unité de capture au moment de la capture de l'image respective.

2. Procédé selon la revendication 1, dans lequel l'étape (c) comporte par ailleurs le fait de:
établir une pluralité de constructions géométriques auxiliaires, où les constructions géométriques auxiliaires sont établies, pour chaque image qui contient une caractéristique (910, 920, 930, 1010, 1020), entre
la position de l'unité de capture (470) qui est associée à l'image et la position d'une caractéristique (910, 920, 930, 1010, 1020) identifiée dans l'image, ou
les positions de plusieurs caractéristiques (910, 920, 930, 1010, 1020) identifiées dans une image,
dans un système de coordonnées; et
évaluer les constructions géométriques auxiliaires pour obtenir une quantité de résultats pour la position et/ou la localisation de la caractéristique (910, 920, 930, 1010, 1020) ou d'une caractéristique dérivée de plusieurs caractéristiques; et
évaluer de manière statistique la quantité de résultats.

3. Procédé selon l'une des revendications précédentes, dans lequel le procédé comporte par ailleurs le fait de:
déterminer une orientation de l'objet (1000) par une évaluation d'une position de référence (460) de l'objet et d'une information de position de l'unité de capture (470), où l'unité de capture est positionnée, au moment de la capture de l'information de position, conformément à l'orientation (610) de l'objet.

4. Procédé selon la revendication 3, dans lequel le procédé comporte par ailleurs le fait de:
déterminer la position de référence (460) de l'objet (1000) en évaluant une quantité d'informations de position de l'unité de capture (470), où la quantité d'informations de position provient d'une trajectoire de déplacement (480) de l'unité de capture.

5. Procédé selon l'une des revendications précédentes, dans lequel le procédé comporte par ailleurs le fait de:
déterminer au moins une dimension de l'objet (1000) par l'évaluation d'un point de référence (510) de l'objet et de la position d'une ou plusieurs des caractéristiques (910, 920, 930, 1010, 1020).

6. Procédé selon l'une des revendications précédentes, dans lequel les positions de l'unité de capture (470) et des caractéristiques (910, 920, 930, 1010, 1020) comportent les coordonnées d'un système de coordonnées prédéterminé; et
dans lequel le procédé comporte par ailleurs une utilisation d'un système cinématique en temps réel, RTK (710) pour la correction de l'information de position et de la localisation de l'unité de capture.

7. Procédé selon l'une des revendications précédentes, dans lequel l'étape (b) comporte une reconnaissance automatisée des caractéristiques (910, 920, 930, 1010, 1020) dans les ensembles d'images et/ou l'étape (c) comporte une détermination automatisée des positions et/ou localisations des caractéristiques.

8. Procédé selon l'une des revendications précédentes, dans lequel il s'agit, pour l'objet (1000), d'une installation éolienne, dans lequel l'installation éolienne présente une tour (420), une nacelle (440), un moyeu (930), des brides de pale de rotor (910), ainsi que des pales de rotor (450) et un axe de rotation commun des pales de rotor; et
dans lequel le procédé comporte par ailleurs la détermination d'un ou plusieurs paramètres de l'installation éolienne sur base des positions et/ou localisations des caractéristiques (910, 920, 930, 1010, 1020).

9. Procédé selon la revendication 8, dans lequel le paramètre comporte une position d'une pointe de pale de rotor (920) qui est déterminée par exemple comme suit:
déterminer une ligne droite entre la position de la pointe de pale de rotor (920) identifiée dans une image et la position correspondante de l'unité de capture (470), où sont par ailleurs également prises en considération, pour déterminer la ligne droite, outre la position de l'unité de capture au moment de la capture de l'image et la position identifiée de la pointe de pale de rotor, également la position de l'unité de capture au moment de la capture de l'image ainsi que les propriétés de l'unité de capture (470);
déterminer une pluralité de lignes droites pour un ensemble d'images de la pointe de pale de rotor (920);
évaluer par paire la pluralité de lignes droites;
calculer un point d'intersection pour chaque paire de lignes droites; et
calculer la position de la pointe de pale de rotor (920) à partir d'une quantité des points d'intersection des paires de lignes droites.

10. Procédé selon l'une des revendications 8 à 9, dans lequel le paramètre comporte une position d'une bride de pale de rotor (910) qui est déterminée, par exemple, comme suit:
déterminer une première ligne droite entre la position d'un premier point de la bride de pale de rotor (910) identifié dans une image et la position de l'unité de capture (470) et une deuxième ligne droite entre la position d'un deuxième point, opposé au premier point, de la bride de pale de rotor bride identifié dans la même image et la position de l'unité de capture, où sont par ailleurs également prises en considération, pour déterminer les première et deuxième lignes droites, outre la position de l'unité de capture au moment de la capture de l'image et les positions identifiées des points de la bride de pale de rotor, également la position de l'unité de capture au moment de la capture de l'image ainsi que les propriétés de l'unité de capture (470);
déterminer une autre ligne droite qui s'étend au centre entre les première et deuxième lignes droites;
déterminer une pluralité d'autres lignes droites pour un ensemble d'images de la bride de pale de rotor (910); et
déterminer la position de la bride de pale de rotor (910) à partir de la pluralité des autres lignes droites.

11. Procédé selon l'une des revendications 8 à 10, dans lequel le paramètre comporte une localisation d'une bride de pale de rotor (910) qui est déterminée, par exemple, comme suit:
identifier deux points opposés de la bride de pale de rotor (910) dans une image;
déterminer un vecteur de direction d'une ligne droite de connexion entre les positions des deux points opposés de la bride de pale de rotor (910);
déterminer une pluralité de vecteurs de direction de lignes de connexion pour un ensemble d'images de la bride de pale de rotor (910);
calculer une quantité de droites normales à une surface possibles de la bride de pale de rotor (910) à partir de la pluralité des vecteurs de direction des lignes droites de connexion en formant par paire le produit vectoriel des vecteurs de direction des lignes droites de connexion; et
calculer une droite normale à une surface de la bride de pale de rotor (910) à partir de la quantité des droites normales à une surface possibles.

12. Procédé selon l'une des revendications 8 à 11, dans lequel le paramètre comporte le centre de la tour (460) qui est déterminé par exemple comme suit:
faire le tour au moins partiellement de la tour (420) le long de la paroi extérieure de la tour par l'unité de capture (470);
enregistrer les positions de l'unité de capture (470) lorsqu'elle fait le tour de la tour (420);
former des quantités partielles de positions à partir de chaque fois trois points, où les trois points présentent une distance prédéterminée l'un par rapport à l'autre;
déterminer une quantité de centres de gravité de triangles à partir d'une pluralité de quantités partielles de positions, où chaque triangle est formé à partir des trois points d'une quantité partielle de positions; et
calculer le centre (460) de la tour à partir de la moyenne des centres de gravité; ou
déterminer une quantité de centres de cercle à partir d'une pluralité de quantités partielles de positions, où chaque centre de cercle est déterminé à partir des trois points d'une quantité partielle de positions à l'aide de l'équation générale du cercle; et
calculer le centre (460) de la tour à partir de la quantité des centres de cercle; ou
déterminer une quantité de centres de périphérie à partir d'une pluralité de quantités partielles de positions, où chaque centre de périphérie est le centre d'une périphérie d'un triangle qui est formé à partir des trois points d'une quantité partielle de positions; et
calculer le centre (460) de la tour à partir de la quantité des centres de périphérie.

13. Procédé selon l'une des revendications précédentes, dans lequel le procédé comporte par ailleurs le fait de:
générer ou modifier un modèle ou paramétrer un modèle générique, par exemple un modèle CAD, de l'objet (1000) par les informations de position et/ou de localisation des caractéristiques (910, 920, 930, 1010, 1020).

14. Procédé d'inspection d'un objet (1000), aux étapes suivantes consistant à:
survoler l'objet le long d'un trajet, et
capturer un ou plusieurs segments (940) de l'objet (1000) lors du survol,
dans lequel le trajet est basé sur une représentation de l'objet par les caractéristiques (910, 920, 930, 1010, 1020) ou paramètres qui sont obtenus par le procédé selon l'une des revendications précédentes.

15. Système permettant de capturer un objet (1000) qui peut être décrit par une pluralité de caractéristiques prédéterminées (910, 920, 930, 1010, 1020), dans lequel le système comporte les caractéristiques suivantes:
un moyen de mesure qui, seul ou en association avec un drone, forme une unité de capture (470), où le moyen de mesure est conçu pour
survoler l'objet,
capturer plusieurs segments de l'objet (1000) à partir de différentes positions pour générer un ensemble d'images, où est associée à chaque image une information de position et de localisation du dispositif de mesure; et
un moyen d'évaluation (730) qui est conçu pour reconnaître des caractéristiques dans les ensembles d'images et pour déterminer les positions et/ou localisations des caractéristiques (910, 920, 930, 1010, 1020) à l'aide des informations de position et de localisation des images qui contiennent les caractéristiques;
dans lequel l'unité de capture (470) est conçue pour
générer les ensembles d'images; et
pour associer à chaque image les informations de position et de localisation de l'unité de capture au moment de la capture de l'image respective.
